# EUROPEAN PATENT SPECIFICATION

(11) **EP 1 528 364 B1**
(45) Date of publication and mention of the grant of the patent: **02.01.2008**
(21) Application number: 04256512.7
(22) Date of filing: 22.10.2004
(51) Int. Cl.: G01C 21/36, G08G 1/0969

(54) **Device, system and method for reporting a traffic condition.**
Vorrichtung, System und Verfahren für die Anzeige von einem Verkehrszustand
Dispositif, système et procédé pour la notification de l'état de la circulation

(30) Priority: 28.10.2003 JP 2003367032
(43) Date of publication of application: 04.05.2005
(73) Proprietor: Pioneer Corporation, Tokyo 153-8654 (JP); Increment P Corporation, Tokyo 153-8665 (JP)
(72) Inventor: Hirose, Koji c/o Increment P Corporation, Tokyo 153-8665 (JP)
(74) Representative: Haley, Stephen

(56) References cited:
- US-A- 5 862 510
- US-A- 6 052 645
- PATENT ABSTRACTS OF JAPAN vol. 2000, no. 25, 12 April 2001 (2001-04-12) & JP 2001 235341 A (MATSUSHITA ELECTRIC IND CO LTD), 31 August 2001 (2001-08-31)

## Description

The present invention relates to a device for displaying map information for travel of a moving body on a display section, a system for the same, a method for the same, a program for the same, and a recording medium with the program recorded therein.

There has been known an in-vehicle navigation device having the configuration in which traffic information (VICS data) concerning traffic accidents, traffic jams or the like is acquired from the Vehicle Information Communication System (VICS) and is displayed on a display screen of a display section, in the state in which the displays indicating traffic accidents, traffic jams or the like are displayed in the manner of being superimposed on map information, to report the traffic condition to users. Meanwhile, a secondary traffic jam often occurs on roads around and close to a chokepoint because drivers try to avoid the traffic jam. Further, the traffic condition reported based on the VICS data indicates the current condition, and therefore even when the users try to avoid the traffic jam based on the reported information concerning the current traffic jam, the users may get involved in a secondary traffic jam. To solve this program, there is the need for development of a navigation device ensuing drivers a more smooth travel.

Further, there has been known an in-vehicle navigation device having the configuration in which current and future traffic conditions are estimated and reported by using statistic traffic jam information data obtained by statistically processing traffic jam information in the past (refer to, for instance, Document 1: Japanese Patent Laid-Open Publication No. HEI 9-113290, page 3, right column to page 7, left column). The navigation device described in the document 1 reports statistic traffic jam information corresponding to time elements such as a day of a week or a time zone based on the traffic jam information data in the state in which the information is superimposed on map information with a display format varying according to the traffic jam condition. With this feature, it is possible to make users estimate traffic jams which may occur soon or in the future according to a day of a week or time zone.

In the in-vehicle navigation device, however, when information concerning a current position of a vehicle is superimposed on map information and displayed on a display section for guiding travel of a vehicle, if the reduction scale is too large, for instance, only main roads are displayed, and contents of displayed map information is limited. To avoid the troubles as described above, the reduction scale of map information displayed for guidance is set to a relatively small value, and an area around the current position of a vehicle is displayed with details as compared to other areas, so that users can easily recognize the driving conditions. Further, by reporting information concerning traffic jams which may occur soon or in the future based on the statistic traffic jam information data obtained by statistically processing traffic jam information in the past as described in the document 1, better guidance can be provided to users.

However, as a display area of map information displayed for providing guidance is limited to a relatively narrow area around the current position of a vehicle, sometimes chokepoints which may occur in the route on which a vehicle is now driving are not displayed in the display area, the chokepoints are displayed first when the vehicle comes near an expected chokepoint, so that the user recognizes the situation unexpectedly. Because of the circumstances, even if a driver can recognize a current or possible traffic jam when the driver comes near the site, the driver may be required to return back over the route to avoid the site of traffic jam, so that there is the need for development of a better guidance system.

A main object of the present invention is to provide a traffic condition reporting device capable of providing information concerning traffic conditions for a moving body as well as a method, a program for the same, and a recording medium with the program recorded therein:
JP-A-2001/235341 discloses a traffic condition reporting device with superimposed display.

The present invention provides a traffic condition reporting device comprising:
a map information acquiring section for acquiring map information,
a current position information acquiring section for acquiring current position information concerning the current position of a moving body,
a destination information acquiring section for acquiring destination information concerning the position of the destination to which said moving body travels;
a traffic information acquiring section for acquiring traffic information concerning traffic conditions of said moving body;
a traveling route setting section for setting a traveling route for said moving body based on said current position information, said destination information, and said map information; and
a display control section for having said traveling route displayed on a display section in a manner of being superimposed on said map information, and also for having said map information displayed, when a change in traffic condition for said moving body is recognized beyond the display area being displayed based on said acquired traffic information, in a display area including the site of the change on said display section, characterised in that said traffic information acquiring section is arranged to acquire either one of the current traffic information concerning traffic conditions at the current point of time and traffic estimation information concerning time-series change in traffic conditions based on statistic traffic condition information obtained by subjecting traffic conditions in the past to statistic processing as a function of time as traffic information; and
by an estimated position recognizing section for recognizing an estimated position to which said moving body travels in a specified period of time,
wherein, when recognizing any change in traffic conditions for said moving body based on said traffic estimation information, said display control section has image information indicating an estimated position of said moving body at a point of time when the change in traffic conditions recognized by said estimated position recognizing section displayed so as to be superimposed on said map information.

A further aspect of the present invention is to provide a traffic condition reporting system that includes: a server unit having a storage section for storing map information therein, and any of aforesaid traffic condition reporting devices for acquiring the map information from this server unit via a network.

Still another aspect of the present invention is to provide a traffic condition reporting system that includes: any of aforesaid traffic condition reporting devices, and a terminal unit connected via a network to the traffic condition reporting device in the state enabling data transaction therebetween, the terminal unit having a display section for displaying the map information thereon.

Still another aspect of the present invention is to provide a traffic condition reporting system comprising:
a terminal unit having a demand signal generating section for generating a demand signal for demanding a route for a moving body to travel on and a display section for providing a screen display of said traveling route superimposed on the map information; and
a server unit with said terminal unit connected thereto via a network in the state enabling data transaction therebetween and comprising a storage section for storing therein map information, a current position information acquiring section for acquiring current position information concerning a current position of said moving body, a destination information acquiring section for acquiring destination information concerning a position of a destination to which said moving body travels to, a traffic information acquiring section for acquiring traffic information concerning traffic conditions for said moving body, a demand signal recognizing section for recognizing said demand signal, and a traveling route setting section for setting, when said demand signal is recognized by said demand signal recognizing section, a traveling route for said moving body based on said current position information, said destination information and said map information,
wherein at least either one of said terminal unit and said server unit has a display control section for providing controls for having said traveling route displayed on said display section in a manner of being superimposed on said map information, and also for providing controls, when a change in traffic conditions for said moving body is recognized beyond the display area currently being displayed based on the traffic information acquired by the traffic information acquiring section in said server unit, to have said map information displayed in a display area including the area of change characterised in that:
the traffic information acquiring section is arranged to acquire either one of the current traffic information concerning traffic conditions at the current point of time and traffic estimation information concerning time-series change in traffic conditions based on statistic traffic condition information obtained by subjecting traffic conditions in the past to statistic processing as a function of time as traffic information; and
by an estimated position recognising section for recognising an estimated position to which said moving body travels in a specified period of time, wherein, when recognising any change in traffic conditions for said moving body based on said traffic estimation information, said display control section has image information indicating an estimated position of said moving body at a point of time when the change in traffic conditions recognised by said estimated position recognising section displayed so as to be superimposed on said map information.

Still another aspect of the present invention is to provide a traffic condition reporting method comprising the steps of:
acquiring map information, current position information concerning current position of a moving body, destination information concerning the position of a destination to which said moving body travels, and traffic information concerning traffic conditions for said moving body;
setting a traveling route for said moving body based on said current position information, said destination information, and said map information; and
providing controls for having said traveling route displayed on a display section in a manner of being superimposed on said map information, and also for having, when a change in traffic conditions for said moving body is recognized beyond the display area currently being displayed based on said acquired traffic information, said map information displayed in a display area including the area on said display section characterising in that:
   the traffic information is that acquired is either one of the current information concerning traffic conditions at the current point of time and traffic estimation information concerning time-series change in traffic conditions based on statistic traffic condition information obtained by subjecting traffic conditions in the past to statistic processing as a function of time as traffic information; and
   by the step of estimating a position to which said moving body travels in a specified period of time, such that, when recognising any change in traffic conditions for said moving body based on said traffic estimation information, image information is displayed indicating an estimated position of said moving body at a point of time when the change in traffic conditions is recognised so as to be superimposed on said map information.

Still another aspect of the present invention is to provide a traffic condition reporting program for making a computing section execute the aforesaid traffic condition reporting method.

Yet another aspect of the present invention is to provide a recording medium with the aforesaid traffic condition reporting program recorded therein in a manner readable by a computer section.
Fig. 1 is a block diagram showing general configuration of a navigation device according to a first embodiment of the present invention;
Fig. 2 is a conceptual diagram schematically showing a tabular structure of data for display constituting map information in the first embodiment;
Fig. 3 is a conceptual diagram schematically showing a tabular structure of matching data constituting map information in the first embodiment;
Fig. 4 is a conceptual diagram schematically showing a tubular structure of data in a traffic jam estimation table in the first embodiment;
Fig. 5 is a conceptual diagram schematically showing a tabular structure of data in a calendar template in the first embodiment;
Fig. 6 is a block diagram showing general configuration of a processing section constituting a navigation device in the first embodiment;
Fig. 7 is a flow chart showing the processing for changing a calendar template in the first embodiment;
Fig. 8 is a conceptual diagram schematically showing a tabular structure of data in a calendar template updated by a calendar changing section in the first embodiment;
Fig. 9 is a flow chart showing the processing for searching a traveling route in the first embodiment;
Fig. 10 is a flow chart showing the processing for switching a display area for guidance processing in the first embodiment;
Fig. 11 is a conceptual diagram showing a state of a screen display during guidance based on a traveling route by searching a traveling route in the first embodiment;
Fig. 12 is a conceptual diagram showing a state of a screen display in free zoom-out in the first embodiment;
Fig. 13 is a conceptual diagram showing a state of a screen display in free zoon-in in the first embodiment;
Fig. 14 is a block diagram showing general configuration of a navigation system according to a second embodiment of the present invention;
Fig. 15 is a block diagram showing general configuration of a terminal unit according to the second embodiment of the present invention;
Fig. 16 is a block diagram showing general configuration of a processing section of the terminal unit in the second embodiment;
Fig. 17 is a block diagram sowing general configuration of a server unit in the second embodiment;
Fig. 18 is a block diagram showing general configuration of a CPU of the server unit in the second embodiment;
Fig. 19 is a flow chart showing the processing for changing a calendar template in the second embodiment; and
Fig. 20 is a flow chart showing the processing for searching a traveling route in the second embodiment.

### [First Embodiment]

The first embodiment of the present invention is described below with reference to the related drawings. In this embodiment, a navigation device as a traffic condition reporting device according to the present invention is described, and the navigation device has the configuration in which guidance is provided for running as a travel condition of a moving body such as, for instance, a vehicle. Incidentally, configuration of the traffic condition reporting device according to the present invention is not limited to that in which guidance is provided for running of a vehicle, and any configuration for reporting traffic conditions of any moving bodies is an object for the present invention, and the traffic condition reporting device according to the present invention can be applied even to a mobile telephone carried by a user.

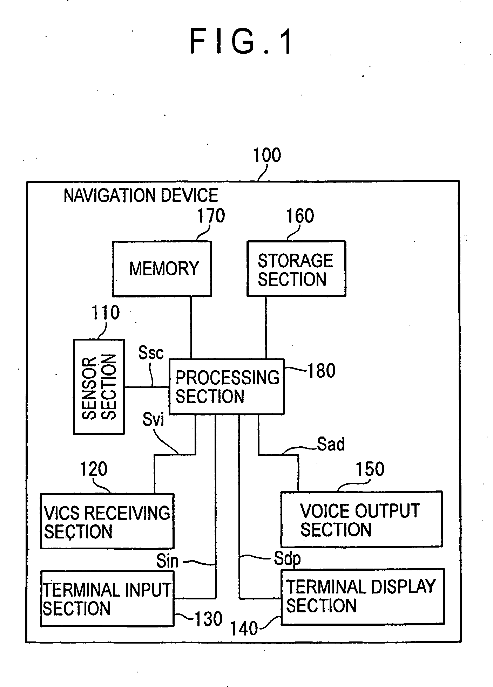

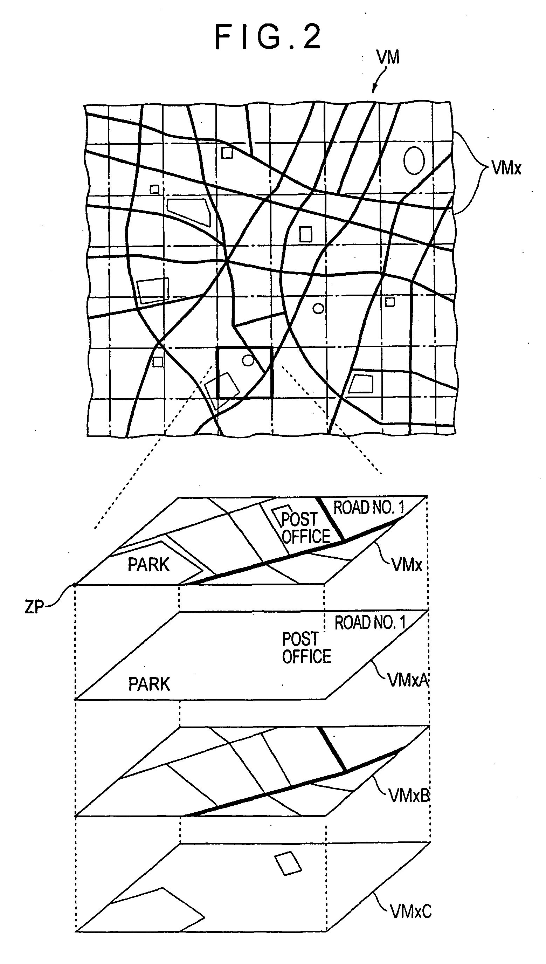

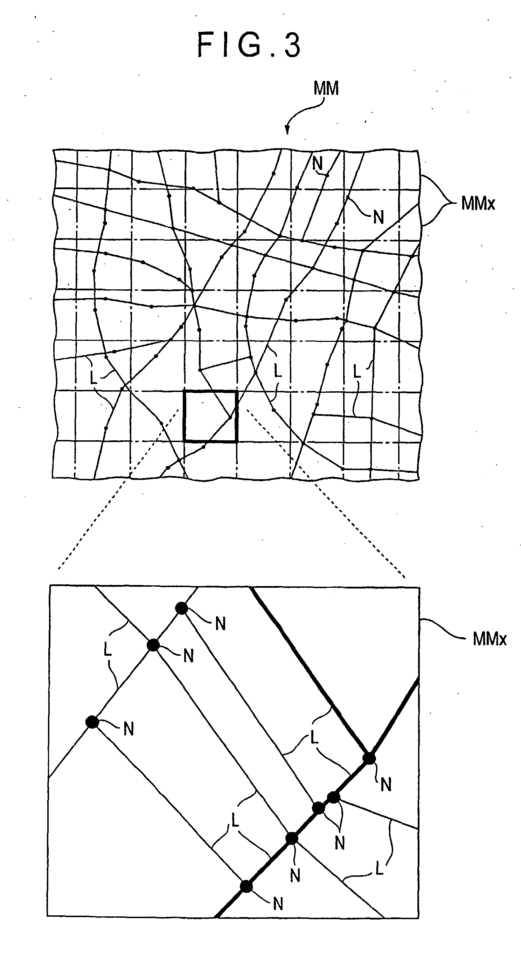

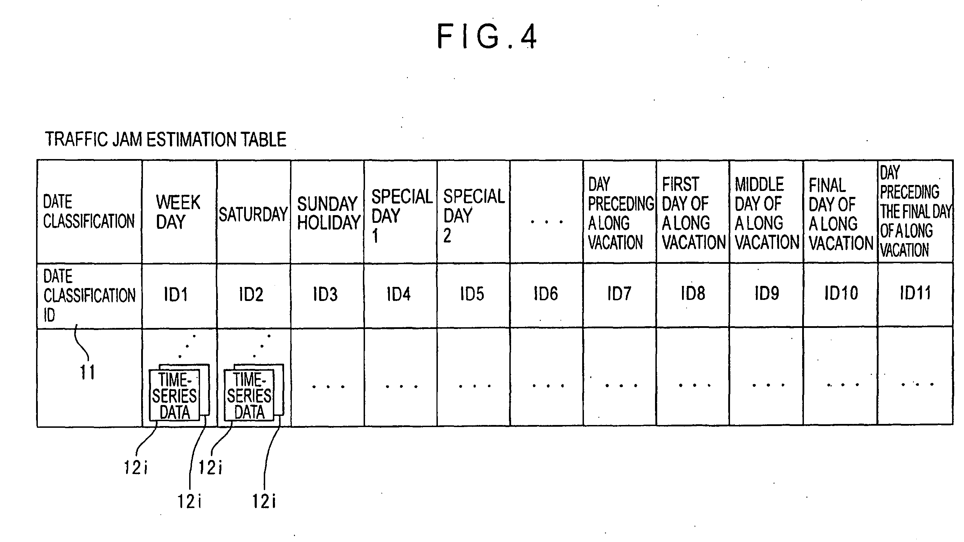

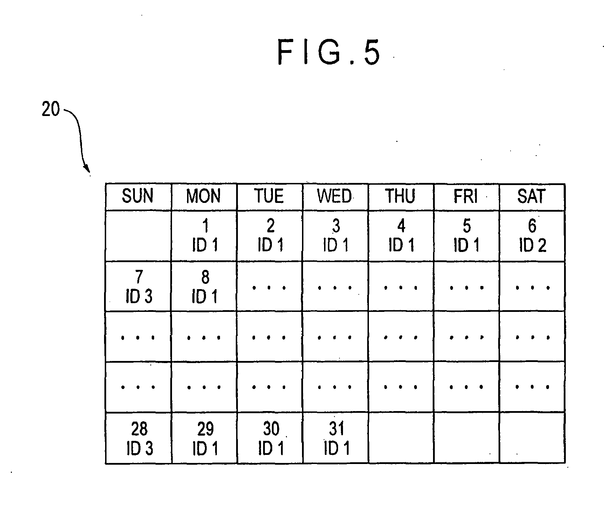

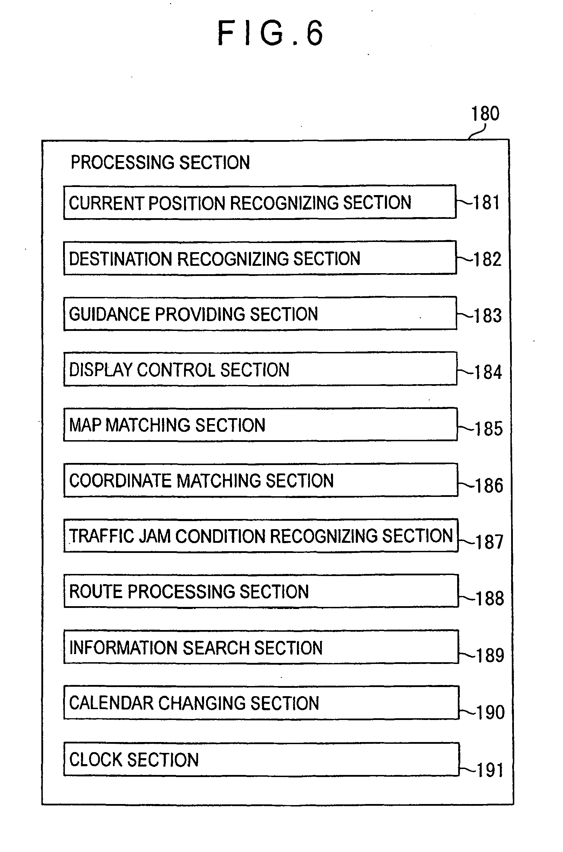

Fig. 1 is a block diagram showing general configuration of a navigation device according to a first embodiment of the present invention. Fig. 2 is a conceptual diagram schematically showing a tabular structure of data for display constituting map information. Fig. 3 is a conceptual diagram schematically showing a tabular structure of matching data constituting map information. Fig. 4 is a conceptual diagram schematically showing a tabular structure of data in a traffic jam estimation table. Fig. 5 is a conceptual diagram schematically showing a tabular structure of data in a calendar template. Fig. 6 is a block diagram showing general configuration of a processing section constituting a navigation device.

### [Configuration of a Navigation device]

In Fig. 1, the reference numeral 100 indicates a navigation device as a traffic condition reporting device. This navigation device 100 is a device for providing guidance for travel of a moving body such as a vehicle in correspondence to travel conditions. The moving body is not limited to a vehicle, and any types of moving bodies such as airplanes and vessels are also objects for this navigation device 100. As the navigation device 100, there can be enlisted an in-vehicle one, a portable one, a PDA (Personal Digital Assistant), a mobile telephone, a PHS (Personal Handyphone System), and a portable personal computer, each of which can be mounted in a vehicle as a moving body. This navigation device 100 provides information concerning a current position or a destination, information or displays available for searching a route to a destination, those available for searching a specified nearest store, or information concerning contents of services provided by a store. This navigation device 100 comprises, as shown in Fig. 1, a sensor section 110, a VICS (Vehicle Information Communication System) receiving section 120 as a traffic information acquiring section, a terminal input section 130 functioning also as a demand signal generating section, a terminal display section 140 as a display section constituting a reporting section, a voice output section 150 constituting a reporting section, a storage section 160, a memory 170, and a processing section 180.

The sensor section 110 detects a traveling state of a moving body such as, for instance, a vehicle, namely a current position or a running condition of a vehicle and outputs the information as a specified signal Ssc to the processing section 180. This sensor section 110 comprises, for instance, a GPS (Global Positioning System) receiving section (not shown) and various types of sensors (not shown) such as a speed sensor, an azimuth sensor, an acceleration sensor and the like.

The GPS receiving section receives navigational electric wave outputted from a GPS satellite (not shown) which is an artificial satellite with a GPS antenna. The GPS receiving section computes simulated coordinate values for the current position based on a signal corresponding to the received navigational electric wave, and outputs the coordinate values as GPS data to the processing section 180.

The speed sensor, which is a sensor for a sensor section 110, is mounted, for instance, in a vehicle which is a moving body, and detects a running speed of the vehicle or actual acceleration thereof according to a signal varying in correspondence to a running speed which is a velocity of the vehicle. This speed sensor reads a pulse signal or a voltage value outputted, for instance, according to rotation of a shaft or a wheel. The speed sensor outputs detected information such as the read pulse signal or voltage value to the processing section 180. The azimuth sensor, which is a sensor, is mounted in a vehicle, has the so-called gyro sensor (not shown), and detects an azimuth for the vehicle, namely a running direction in which the vehicle runs. This azimuth sensor outputs a signal, which is detected information concerning the running direction detected as described above, to the processing section 180. The acceleration sensor, which is a sensor, is mounted in a vehicle, and detects acceleration in a running direction in which the vehicle runs. This acceleration sensor converts the detected acceleration to a sensor output value which is information detected, for instance, in response to a pulse or a voltage, and outputs the output value to the processing section 180.

The VICS receiving section 120 has a VICS antenna (not shown), and receives traffic information through this VICS antenna. More specifically, the VICS receiving section 120 receives traffic information concerning traffic jams, traffic accidents, construction works, and traffic regulations (described as VICS data hereinafter), for instance, from a beacon or an FM multiplex broadcasting. Then the VICS receiving section 120 outputs the received traffic information as a prespecified signal Svi to the processing section 180.

The VICS data has a tabular structure in which a plurality of conceptual items as described below are compiled into one set of data:
* Degree of traffic jams: jammed, congested, smooth, or the like
* Information concerning the head of a traffic jam
* Information concerning the length of a traffic jam
* Link travel time information: A period of time required for a vehicle to travel between intersections which are the so-called VICS links
* Zone travel time information: A period of time required for a vehicle to travel over a zone which is a specific zone longer than a VICS link
* Information concerning contents of traffic regulations, causes for traffic jams, regulated zones, or the like
* Information concerning availability of parking areas and the like
* Information concerning service areas and parking areas
* Other types of information

The terminal input section 130 is, for instance, a keyboard or a mouse, and has various types of operation buttons or operation knobs (not shown). Contents of information and data inputted with the operation buttons or operation knobs is, for instance, set items for setting contents of operations of the navigation device 100 or the like. More specifically, the set items include those for setting contents to be obtained or conditions for obtaining the information, those for setting a destination, those for searching information, those for displaying a running condition of a vehicle which is a travel condition of the vehicle, those for switching displays, and the like. When an input operation for inputting set items is performed in the terminal input section 130, the terminal input section outputs a specific signal Sin in response to the input operation to the processing section 180. The input operations performed in the terminal input section 130 are not limited to those performed with the operation buttons or operation knobs, and for instance, input operations with a touch panel provided in the terminal display section 140, input operations with voices, and other various types of input operations allowing input of various types of set items may be employed in this invention.

The terminal display section 140 is used to provide screen displays of a signal Sdp for image data from the processing section 180 under control by the processing section 180. The image data include, but not limited to, for instance, image data such as map information or search information, TV image data received with a TV receiver (not shown), image data recorded in a recording medium such as an external device such as an optical disc or an electromagnetic disc or a memory card and read out with a drive or a driver, and image data from the memory 170. As examples of this terminal display section 140, there can be enlisted, for instance, a liquid crystal panel or an organic EL (Electro Luminescence) panel, a PDP (Plasma Display Panel), a CRT (Cathode-Ray Tube), a FED (Field Emission Display), and an electrophoresis display panel.

The voice output section 150 has, for instance, a voice-generating section (not shown) such as a speaker. This voice output section 150 is controlled by the processing section 180, and outputs various signals Sad such as audio data from the processing section 180 from the voice-generating section as voice and sounds. Information outputted as voices and sounds includes, for instance, that concerning a running direction or a running condition of a vehicle, and is provided to a driver or other persons in the vehicle for guidance. The voice-generating section can also output TV audio data received with a TV receiver or those recorded in a recording medium or in the memory 170 according to the necessity. Further the voice output section 150 can utilize not only a voice-generating section provided as described above, but also a voice-generating section provided in the vehicle.

The storage section 160 stores therein the map information shown, for instance, in Fig. 2 and Fig. 3, or the traffic jam estimation table 10 as shown in Fig. 4 in the readable state. This storage section 160 comprises a map information storage area in which map information is stored, and a traffic jam estimation table storage area in which the traffic jam estimation table 10 is stored, and the like. The descriptions above assume the configuration in which the two storage areas as described above are provided in the storage section 160, but the configuration is not limited this one, and also the configuration is allowable in which the storage area described above is not provided in the storage section 160, or in which other storage areas are provided therein. Further the storage section 160 may comprise a drive or a driver allowing for storage of data in a recording medium such as a HD (Hard Disk), a DVD (Digital Versatile Disc), an optical disc, and a memory card in the readable form.

The map information as information comprises display data VM which is the so-called POI (Point of Interest) data as shown, for instance, in Fig. 2, the matching data MM as shown, for instance, in Fig. 3, and map information for searching a traveling route.

The display data VM comprises, for instance, a plurality of display mesh information VMx each having a specific number assigned thereto. Namely the display data VM is divided to a plurality of display mesh information VMx correlated to a specific area, and a plurality of sets of the display mesh information VMx are arrayed in both the vertical and horizontal directions in succession to each other. Further the display mesh information VMx may be subdivided to lower layer display mesh information VMx each relating to a specific area. Each display mesh information VMx is divided to a plurality of squares with the edge corresponding to an actual geographical distance scaled down according to the scale size of the map and includes information concerning the absolute coordinates ZP on the entire map information, for instance, on the global map at a prespecified corner portion.

The display mesh information VMx comprises name information VMxA indicating, for instance, names of intersections, road information VMxB, and background information VMxC. The name information VMxA includes data having a tabular structure in which names of intersections or places as other elemental data in the area are positioned and displayed each at a specific position corresponding to the positional relations with the absolute coordinates ZP. The road information VMxB includes data based on a tabular structure in which roads as road element data in the area are positioned and displayed each at a specific position corresponding to the positional relation with the absolute coordinates ZP. The background information VMxC includes data having a tabular structure in which marks indicating famous places or buildings as other element data or image information as other element data indicating the famous places or buildings are positioned and displayed each at a specific position corresponding to the positional relation with the absolute coordinates ZP.

The matching data MM is divided, like the display data VM, to a plurality of matching mesh information MMx each relating to a specific area having, for instance, a unique number assigned thereto and a plurality of matching mesh information MMx are arrayed in both the vertical and horizontal directions in succession to each other. The matching mesh information MMx may be further subdivided to lower matching mesh information MMx relating to specified areas respectively according to the necessity. Each matching mesh information MMx is divided to squares with the edge having a preset length corresponding to the actual geographical distance reduced according to the reduction scale of the map, and has information concerning absolute coordinates ZP on the entire map information, for instance on the global map at a prespecified corner portion. The matching mesh information MMx may have a data structure showing different areas from those indicated by the display mesh information VMx, namely may have a different reduction scale for divided areas. If the reduction scale is identical, the data may be correlated to each other with information for unique numbers, and if the reduction scales are different from each other, the data may be correlated to each other, for instance, with the absolute coordinate values.

The matching data MM is used, for instance, when traveling conditions for the vehicles are displayed on the map information in the superimposed state, in the matching processing for modifying a display indicating a vehicle so that the display is positioned on a road to prevent the display indicating the vehicle from being positioned not on a road, but on a building. This matching data MM has a plurality of link-array block information.

As shown in Fig.3, the link array block information includes data based on a tabular structure in which a plurality of links L each as a line segment information constituting a road and indicating a line segment connecting nodes N as point information to each other are correlated to each other with specific regularity. More specifically, links L each having a prespecified length are successively connected to form a broken line indicating, for instance, a continuous road such as Koshu Road or Oume Road. The link L comprises ling segment-specific information showing a specific number assigned to each link L (described as a link ID hereinafter) and node information such as a specific number indicating two nodes connected with the link L. Further the link L is associated with the VICS link, so that the VICS data and a position displayed on a map correspond to each other.

On the other hand, the node N is equivalent to a junction such as an intersection, a bending section, a branch point, and a confluence of a road. Information concerning the node N includes point-specific information which is a specific number assigned to each node N in the link array block information, coordinate information for a point at which each node N is present, and flag information which is branch information whether a point is a branching point such as an intersection or a branch point where a plurality of links cross each other or not. The node N includes that indicating only point-specific information and coordinate information and not having flag information for showing only a form of a road, or that further including attribute information which is information indicating road elements such as a tunnel or a word width. The node N not having flag information and indicating only a form of a road is not utilized for determination of identity of a point with a coordinate matching section 186 described hereinafter.

The map information for searching a traveling route has a tabular structure similar to that of, for instance, the matching data MM, namely a tabular structure including point information indicating a point such as the node N showing a road and line segment information indicating a line segment such as the link L, and indicates roads for searching a traveling route.

The traffic estimation table 10 is statistic traffic information obtained by statistically processing information on traffic conditions in the past in association with a time element, which is a group of data indicating traffic conditions in the past at a given position. This traffic jam estimation table 10 is used for estimating traffic jam conditions in the processing for searching a route or the processing for displaying a map. This traffic jam estimation table 10 has a tabular structure in which, for instance, as shown in Fig. 4, a date classification ID (identification) 11, a time-series data 12i (i: natural number) and the like are compiled into a set of records and a plurality of sets of records are recorded therein.

The date classification ID 11 is, for instance, an ID number indicating a classification for a date or a day of a week. In the following description, a classification for a date and a day of a week is described as a date classification according to the necessity. More specifically, the configuration is allowable in which, for instance, "ID1" indicates a "week day" from Monday to Friday excluding a national holiday; "ID2" indicates a Saturday excluding a national holiday; "ID4" indicates a "special day 1" on which a festival is held, for instance, in City A; "ID5" indicates a "special day 2" on which an sports game is held, for instance, in Stadium B; "ID7" indicates a "day preceding a long vacation" indicating, for instance, a day preceding four successive holidays; and "ID 11" indicates a "day preceding a final day of a long vacation" indicating, for instance, a third day of four successive holidays. The date classification ID 11 is not limited to an ID number, and may be text data describing, for instance, "a week day" or the like.

The time-series data 12i is data concerning a tendency in traffic jams as a traffic condition obtained by accumulating VICS data acquired, for instance, from VICS for each VICS link and statistically processing the accumulated data at an interval of 10 minutes according to a date classification which is a time element for each of the accumulated VICS links. Namely the time-series data 12i is data concerning, for instance, a length of a traffic jam, a traffic jam condition indicating a degree of traffic jam, and a time required to get out of the traffic jam for each prespecified time zone at a given place such as each VICS link. The above descriptions assume the configuration in which the time-series data 12i is generated by statistically processing the accumulated data according to a time element at each prespecified site as described above, but the configuration is not limited to this one, and also the configuration is allowable in which the time-series data 12i is generated for each facility, each store, each city, town, and village, each road and the like.

The storage section 160 stores therein search information for obtaining, for instance, information for a specified point in map information. Namely the search information includes miscellaneous information concerning contents such as names of prefectures, names of cities, towns, and villages, name of places or information for guidance, or information for stores at each point, and has a tabular structure based on the tree structure in which various items are correlated to each other in the layered state.

The memory 170 stores therein information concerning set items inputted in response to input operations in the terminal unit section 130, musical data or image data, a plurality of calendar templates 20 as shown in Fig. 5 and the like in the readable state according to the necessity. The memory 170 also stores therein various types of programs developed on the OS (Operating System) controlling operations of the entire navigation device 100. As this memory 170, it is preferable to use a memory having the configuration in which stored data can be maintained even when power suddenly downs due to, for instance, a power failure such as, for instance, a CMOS (Complementary Metal-Oxide Semiconductor) memory. The memory 170 may comprise a drive or a driver for storing therein data in a recording medium such as a HD, a DVD, and an optical disc in the readable state.

The calendar template 20 is a template showing a date classification for each day. More specifically, the calendar template 20 includes date information concerning a date, a classification ID number correlated to the date in the data information, and the like compiled into a set of record, and in the calendar template 20, a plurality of sets of record are compiled, for instance, into a monthly tabular data set with a tabular structure for each of 12 months for a year.

The classification ID number is an ID number which is identical to any of the date classification IDs 11 in the traffic jam estimation table 10, and indicates the data classification of a day identified by the date information. For instance, 5-th day of a month which is Friday has a date classification of "a week day" correlated to the "ID1", and 15-th day of a month which is Monday has a date classification of "holiday" correlated to the "ID3". The classification ID numbers in this calendar template 20 can be changed by the processing section 180 according to the necessity. The classification ID number is not limited to a numerical value, and may have a data structure using text data corresponding to data classification IDs in the traffic jam estimation table 10 such as "week day" correlated to a specific date.

The processing section 180 has various types of I/O ports (not shown), a VICS receiving port to which, for instance, a VICS antenna is connected, a GPS receiving port to which a GPS receiving section is connected, a sensor port to which various types of sensors are connected, a key input port to which the terminal input section 130 is connected, a display section control port to which the terminal display section 140 is connected, a voice control port to which the voice output section 150 is connected, a storage port to which the storage section 160 is connected, and a memory port to which the memory 170 is connected. In addition, the processing section 180 comprises, as various types of programs as shown in Fig. 6, a current position recognizing section 181 as a current position acquiring section, a destination recognizing section 182 as a destination information acquiring section, a guidance providing section 183, a display control section 184 also functioning as a display change demand information acquiring section, a map matching section 185, a coordinate matching section 186, a traffic jam condition recognizing section 187 as a traffic information acquiring section also functioning as a map information acquiring section, a current traffic information acquiring section and a statistic traffic information acquiring section, a route processing section 188 as a traveling route setting section also functioning as an estimated position recognizing section and a demand signal recognizing section, an information searching section 189, a calendar changing section 190, and clock section 191.

The current position recognizing section 181 recognizes a current position of a vehicle. More specifically the current position recognizing section 181 computes a plurality of current simulated positions of a vehicle based on speed data and azimuth angle data outputted from the speed sensor and the azimuth sensor in the sensor section 110 respectively. Further the current position recognizing section 181 recognizes simulated coordinate values for current position of the vehicle based on the GPS data for the current position outputted from the GPS receiving section. Further the current position recognizing section 181 compares the computed current simulated positions to the current simulated coordinate values recognized as described above, and computes a current position of the vehicle on the map information acquired independently to recognize the current position.

Further the current position recognizing section 181 determines a slope of a road on which a vehicle travels or a vertical interval, and computes a current simulated position of the vehicle to recognize the current position. Namely the current position recognizing section 181 can accurately recognize a current position of a vehicle even at a place where a plurality of constructions are overlaid such as a cubic interchange or a highway. Further the current position recognizing section 181 recognizes, when a vehicle is running on a mountain path or a sloping road, an accurate current position by compensating an error between a travel distance obtained only from the speed data or azimuth data and an actual mileage using the detected slope of the road.

The current position recognizing section 181 can recognize, in addition to a current position of a vehicle as described above, for instance, a start point as a traffic origin set in the terminal input section 130 as a current simulated position. The miscelloneous information obtained by the current position recognizing section 181 is stored in the memory 170 according to the necessity.

The destination recognizing section 182 acquires destination information concerning a destination set, for instance, in response to an input operation in the terminal input section 130 to recognize a position of the destination. The destination information set and inputted as described above may include miscelloneous information for identifying a specific place such as coordinate values such as altitude and longitude, an address, and a telephone number. The destination information recognized by this destination recognizing section 182 is stored in the memory 170 according to the necessity.

The guidance providing section 183 provides guidance for travel of a vehicle, namely for assisting running of a vehicle based on the traveling route information or geographical guidance information stored in the memory 170 and previously acquired according to a running condition of the vehicle as image displays on the terminal display section 140 or voices generated by the voice output section 150. More specifically, the guidance providing section 183 provides guidance, for instance, by displaying a specific arrow mark or a sign on a display screen of the terminal display section 140 or by generating voice guidance in the voice output section 150 such as "Turn to the right for XX at YY intersection 700 meters ahead" of "Off from the traveling route", or "Traffic jam ahead".

The display control section 184 reports miscellaneous information to users by displaying the information on a screen of the terminal display section 140 by controlling the terminal display section 140 according to the necessity. Further the display control section 184 provides controls, for instance, for changing a display area to be displayed in the map information by changing the reduction scale for display of the map information, or by changing an area to be displayed in response to an input operation in the terminal input section 130 or upon recognition of various types of signals. When changing the reduction scale for display of the map information, the display control section 184 changes the display so that the reduction scale varies in the substantially successive mode like in the so-called free zoom-in or free zoom-out. Further the display control section 184 provides controls various screen displays for setting and inputting information for various types of set items, for instance, by prompting a user to perform an input operation in the terminal input section 130.

The map matching section 185 executes the map matching processing for having the current position recognized by the current position recognizing section 181 based on the map information acquired from the storage section 160. This map matching section 185 executes, as described above, and by using the matching data MM, the map matching processing for displaying the current position by modifying the current position information according to the necessity so that the position displayed being superimposed on the map in the terminal display section 140 will not be off from a road which is an element constituting the map displayed in the terminal display section 140.

The coordinate matching section 186 executes the coordinate matching processing for determination as to whether the point information, which is information concerning a node N in the matching data MM included in the map information acquired from the storage section 160, is for the identical point or not. Namely, as described above, the coordinate matching section 186 acquires point information for the node N in the matching data MM as described above, and reads the coordinate information constituting the point information. More specifically, the coordinate matching section 186 computes coordinate values such as altitude and longitude based on information for coordinate values in the coordinate information or the offset rate, and when different nodes N have the same coordinate values, the coordinate matching section 186 reads the flag information constituting the point information for the nodes N, and determines whether the nodes N are identical or not. When it is determined that the nodes N are identical, the coordinate matching section 186 determines that the node N indicates a road condition where links L connected to the node N and constituting different link array block information respectively cross each other such as an intersection. When it is determined that the nodes N are not identical, the coordinate matching section 186 determines that the nodes N indicate a road condition where the links L connected to the node N and constituting different link array block information respectively do not cross each other such as a cubic interchange.

The traffic jam condition recognizing section 187 generates current traffic jam information concerning a condition of a current traffic jam. More specifically, the traffic jam condition recognizing section 187 acquires VICS data from VICS outputted from the VICS receiving section 120 according to the necessity. Then the traffic jam condition recognizing section 187 generates the current traffic jam information concerning a condition of the current traffic jam, for instance, within an area including the current position and a destination, or within a specific range around the current position based on the VICS data acquired as described above.

The traffic jam condition recognizing section 187 obtains an estimated arrival time indicating an estimate time when a vehicle arrives at a given place up to the destination. The traffic jam condition recognizing section 187 obtains, for instance, an estimated arrival time indicating an estimated time when the vehicle arrives at a given place up to the destination. Then the traffic jam condition recognizing section 187 generates, based on the estimated arrival time obtained as described above or a specified point of time previously set and inputted as an estimated arrival time or the time-series data 12i and the like, traffic jam estimation information concerning estimation of traffic jam conditions generated at a given place until the vehicle arrives at the destination or at a specified point of time previously set and inputted.

More specifically, the traffic jam condition recognizing section 187 recognizes a classification ID number foe a date on which estimation on traffic jams is to be made based on the time information and calendar template 20 acquired from the clock section 191 and the calendar template 20. Then the traffic jam condition recognizing section 187 searches for and acquires the time-series data 12i for an area corresponding to the recognized classification ID number and including a current position and a destination from the traffic jam estimation table 10. Then, based on the current jam estimation information and current time obtained from the clock section 191, the traffic jam condition recognizing section 187 obtains an estimated arrival time when the vehicle arrives at a specified point on a candidate route identified by the candidate traveling route information described below and generated by the route processing section 188.

As the method of obtaining an estimated arrival time, there can be enlisted the following methods as examples. Namely the method may be employed for this purpose in which a distance to a given position on the candidate raveling route is recognized from the candidate traveling route information and a period of time required to travel the distance recognized as described above is computed based on the current traffic jam information. Then an estimated arrival time is computed from the required time as described above and the current time. Then the traffic jam condition recognizing section 187 generates traffic jam estimation information based on the time-series data 12i and the estimated arrival time.

The route processing section 188 searches for a route by processing a running route for a vehicle based on the set items set and inputted by a user for setting a traveling route and the map information stored in the storage section 160. This route processing section 188 can also compute a traveling route taking into account the current traffic jam information or traffic jam estimation information generated by the traffic jam condition recognizing section 187 when the processing section 180 recognizes the traffic jam estimation information demanding a route search reflecting traffic jam information as well as traffic jam estimation.

More specifically, when the traffic jam estimation demand information is not described in the set item information, the route processing section 188 acquires information concerning a current position and destination, set item information, and current traffic jam information. Then the route processing section 188 searches for routes on which, for instance, the vehicle can travel by making use of the map information for searching a traveling route based on the acquired information, and generates traveling route information indicating routes requiring a short period of time to ravel, routes each with a short travel distance, routes capable of evading traffic jams or places put under traffic regulations and the like. Then the route processing section 188 computes the time for the vehicle to reach the destination through the routes indicated by the traveling route information, and generates required time information concerning the required traveling time.

On the other hand, when the traffic jam estimation demand information is described in the set item information, the route processing section 188 acquires information concerning the current position and destination, set item information, and current traffic jam information. Then the route processing section 188 generates candidate traveling route information indicating routes requiring a short period of time to travel, routes with a short travel distance, candidate routes capable of evading traffic jams or places put under traffic regulations and the like. Then the route processing section 188 acquires the current traffic jam information and traffic jam estimation information and generates traveling route information indicating specific routes by further screening the candidate routes indicated by the candidate traveling route information based on the information acquired as described above.

When a traveling route is searched, sometimes the matching data MM included in the map information may be used in addition to the map information for searching a traveling route. For instance, the matching data MM may be used when searching for a traveling route making use of a road not indicated by the map information for searching a traveling road such as a narrow back road. When the matching data MM is used, the route processing section 188 searches for a route based on the determination of a rod condition by the coordinate matching section 186 according to the necessity. Further the traveling route information also includes route guidance information for assisting running of a vehicle, for instance, when the vehicle runs. This route guidance information is provided as displays on the terminal display section 140 or as voices generated by the voice output section 150 under controls by the guidance providing section 183 according to the necessity for assisting running of the vehicle.

The route processing section 188 computes an estimated position which the vehicle will arrive in a prespecified period of time, estimated time required before arriving at the estimated position, and arrival hour based on the current position information for the vehicle, traveling route information, and map information, and generates estimated position information and estimated arrival time information. The estimated position information and estimated arrival time information are stored in the memory 170 according to the necessity.

The information searching section 189 hierarchically searches and acquires search information stored in the storage section 160 based on, for instance, item information concerning stores or facilities and in response to a search demand for search information set and inputted, for instance, in the terminal input section 130.

The calendar changing section 190 updates the calendar template 20 stored in the memory 170 based on the contents of an instruction for changing set and inputted by a user according to the necessity. More specifically, the calendar changing section 190 recognizes miscellaneous information set and inputted in response to an input operation by a user in the terminal input section 130 such as date information, even information concerning events such as festivals and sports games and the like. Further the calendar changing section 190 recognizes a date identified by the date information and also recognizes a classification ID number correlated to the even information. As the method of recognizing the classification ID number, there can be enlisted, for instance, the following method. Namely the method may be employed for this purpose in which a date classification is determined from the set and inputted even information and a classification ID number is recognized from the date classification determined as described above. For instance, if the even information concerns a sports game held, for instance, in Stadium B, the calendar changing section 190 determines that the date classification is "special day 2", and recognizes based on this "special day 2" that the classification ID number is "ID5". When the even information concerns a final day of a vacation consisting of five successive days, the calendar changing section 190 recognizes that the date classification is "final day of a long vacation", and also recognizes from this "final day of a long vacation" that the classification ID number is "ID10". The calendar changing section 190 changes the calendar template 20 based on the date and classification ID number recognized as described above according to the necessity.

The clock section 191 recognizes the current hour based on a reference pulse such as an internal clock. Then the clock section 191 outputs the time information concerning the recognized current hour according to the necessity.

### [Operations of the Navigation Device]

Operations of the navigation device are described below with reference to the related drawings.

### (Processing for changing the calendar template)

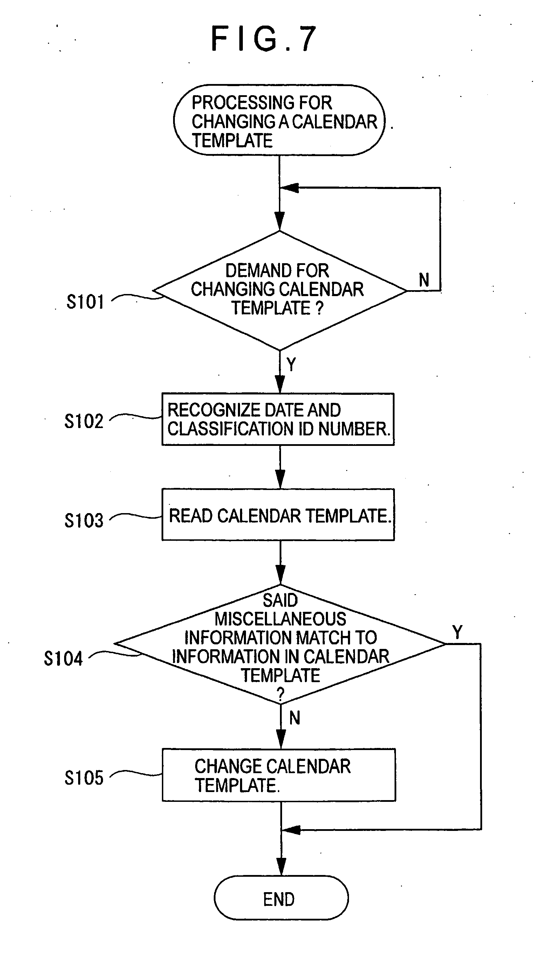

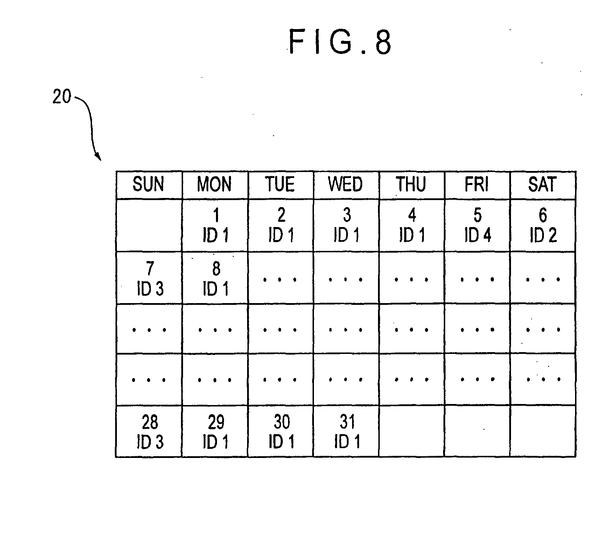

At first, as one of the operations of the navigation device 100, the processing for changing the calendar template 20 is described with reference to Fig. 7 and Fig. 8. The following description assumes a case where a user changes the calendar template 20 as shown in Fig. 5 based on the information, which a user recognizes, for instance, in a program provided in various types of broadcasting such as a radio broadcasting or a television broadcasting, or in a newspaper, a magazine, the official gazette, and the like or by a mobile telephone or the like connected to a mobile telephone network and indicating that, for instance, a festival is held on 5th in City A Fig. 7 is a flow chart illustrating the processing for changing a calendar template. Fig. 8 is a conceptual diagram schematically showing a tabular structure of data in the calendar template updated by the calendar template changing section.

At first, a passenger in a vehicle, which is also a user, turns on the power of the navigation device 100 so that the navigation device 100 is powered. When power is turned on, the processing section 180 has a main menu displayed by controlling the terminal display section 140, and a display screen prompting the user to input and set contents of operations of the navigation device 100 is displayed on the terminal display section 140.

Then, as shown in Fig. 7, the user performs an input operation, for instance, in the terminal input section 130 to set an instruction for executing the processing for changing the calendar template 20. When the processing section 180 recognizes the user's input operation for demanding the processing for changing the calendar template 20 with the calendar changing section 190 (step S101), the processing section 180 has a display screen prompting input of date information, even information and the like required for changing the calendar template 20 displayed on the terminal display section 140.

When the user performs an input operation for setting the date information, event information, and the like in the terminal input section 130 according to an instruction on the display screen displayed as described above, the calendar changing section 190 acquires the date information, event information and the like inputted for setting. As a method for the user to input the date information, event information, and the like for setting, there can be enlisted a method in which, for instance, the user inputs various information with characters or selects one from several candidates shown on the terminal display section 140, the method described below and the like. For instance, the user moves, in the terminal display section 140, the cursor displayed in the flashing state in an area or around the area showing any date in the calendar template 20 as shown in Fig. 5 by operating the terminal input section 130 to select a date. Then the user inputs the event information on the selected day, for instance, with characters, or selects one from several even information displayed thereon.

When the calendar changing section 190 acquires the date information, event information, and the like, the calendar changing section 190 executes the processing for recognizing the miscelloneous information acquired as described above (step S102). More specifically, the calendar changing section 190 recognizes a date identified by the date information together a classification ID number correlated to the event information. Herein, the calendar changing section 190 recognizes that the date identified by the date information is 5^{th}. Further after the calendar changing section 190 determines that the date classification correlated to the even information is "special day 1" for the festival to be held in City A, the calendar changing section 190 recognizes from the date classification determined as described above that the classification ID number is "ID4".

Then the calendar changing section 190 reads out the calendar template 20 stored in the memory 170 (step S103). Then the calendar changing section 190 determines whether the various information recognized in step S102 matches the information in the calendar template 20 read out in step S103 or not (step S 104). More specifically, the calendar changing section 190 recognizes the classification ID number correlated to the date recognized in step S 102 from the read-out calendar template 20. Then the calendar changing section 190 determines whether the classification ID number recognized from the calendar template 20 is identical to the classification ID number recognized in step 102 or not.

When the calendar changing section 190 determines in step S104 that the classification ID number recognized from the calendar template 20 is identical to the classification ID number recognized in step 102, the calendar changing section 190 terminates the processing without changing the calendar template 20. On the other hand, when the calendar changing section 190 determines in step S104 that the classification ID number recognized from the calendar template 20 is not identical to the classification ID number recognized in step 102, the calendar changing section 190 changes the calendar template 20 based on the various information recognized in step S102 (Step S105) and terminates the processing. More specifically, as the classification ID number for 5^{th} recognized in step 102 is "ID4" and the classification ID number for 5^{th} recognized from the calendar template 20 is "ID1", the calendar changing section 190 changes the classification ID number for 5^{th} from the "ID1" to "ID4" as shown in Fig. 8 and then terminates the processing.

### (Processing for searching a traveling route)

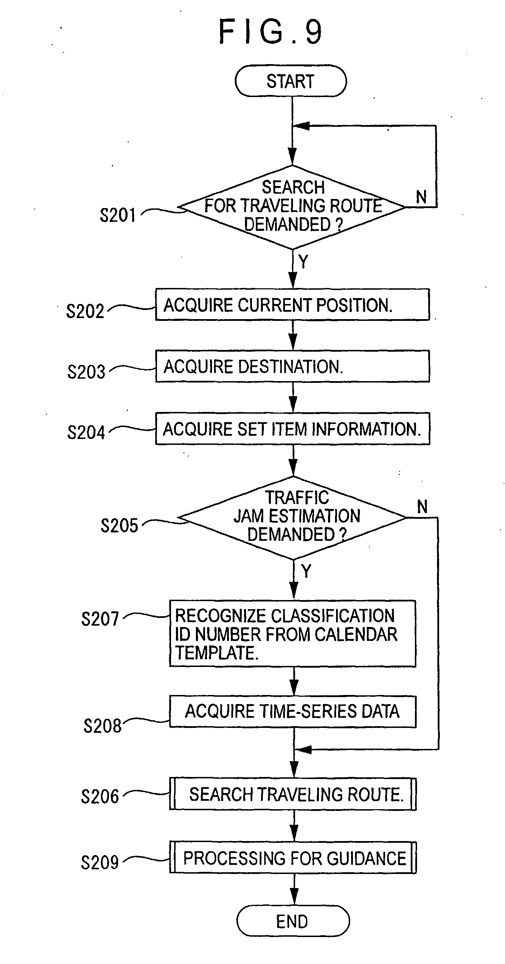

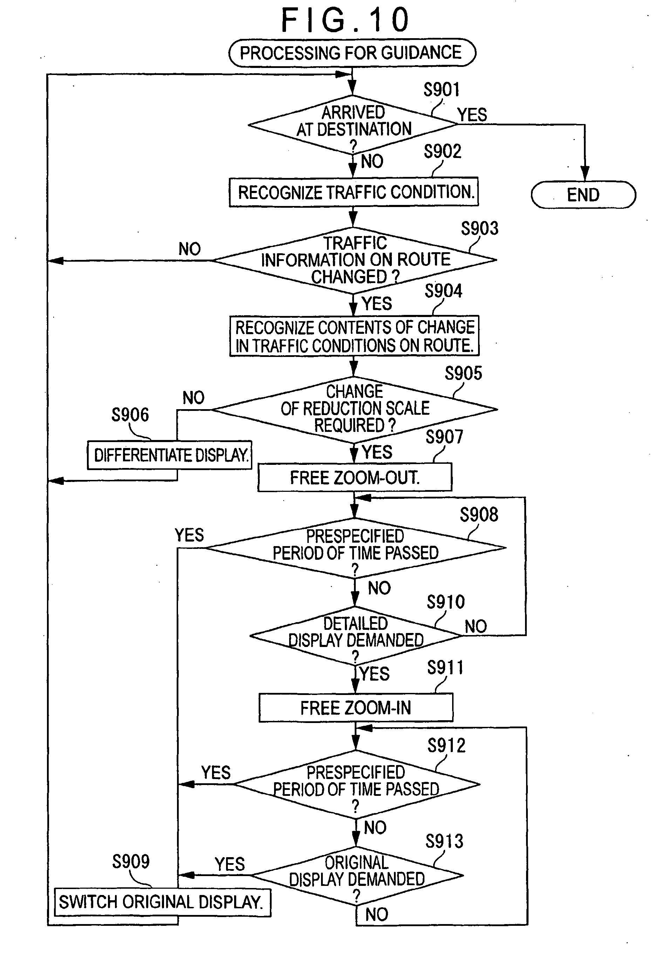

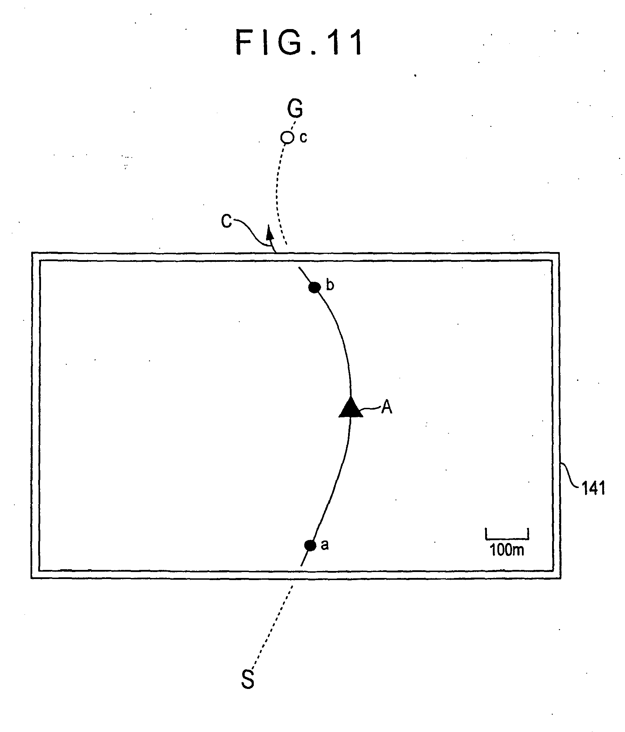

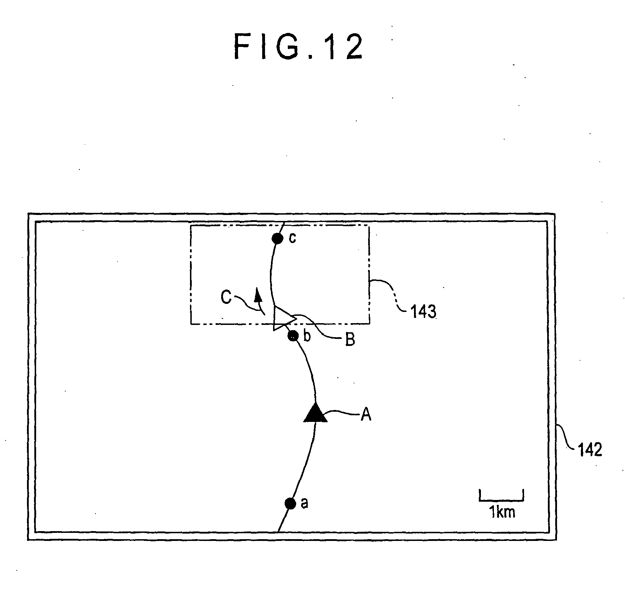

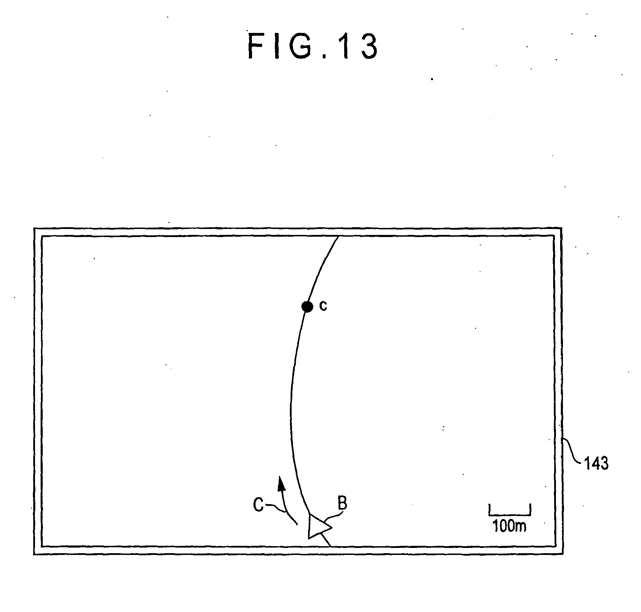

Next the processing for searching a route, which is an operation performed by the navigation device 100, is described with reference to Fig. 9 and Fig. 10. Fig. 9 is a flow chart showing the processing for searching a traveling route in the navigation device. Fig. 10 is a flow chart showing the processing for switching displays for guidance. Fig. 11 is a conceptual diagram showing the state of the screen display for guidance based on the traveling route set by searching a traveling route. Fig. 12 is a conceptual diagram showing a screen display state in free zoom-out. Fig. 13 is a conceptual diagram showing the screen display state in free zoom-in.

At first, as shown in Fig. 9, a user inputs an instruction for execution of the traveling route search processing, for instance, to traveling to another site by carrying put an input operation in the terminal input section 130. When this input operation for setting is performed, a demand signal for demanding a traveling route is generated. When the traveling route processing section 188 in the processing section 180 recognizes the demand signal generated in response to the input operation for setting a demand for executing the traveling route search processing (step S201), the processing section 180 has a screen display provided on the terminal display section 140 for prompting the user to input and set miscellaneous information required to traveling route search, for instance, information concerning a destination, information concerning whether the user wants to know a traveling route with the shortest distance or a traveling route allowing the user's arrival at the destination within the shortest period of time, or whether estimation of traffic jams is required or not.

When the processing section 180 recognizes the miscellaneous information required for traveling route search by the route processing section 188, at first the processing section 180 executes the processing for recognizing the current position with the current position recognizing section 181 (step S202), and then executes the processing for recognizing the destination set and inputted as described above with the destination recognizing section 182 (step S203). More specifically, the processing section 180 computes a current position of the vehicle with the current position recognizing section 181 based on speed data and azimuth data outputted from the speed sensor and azimuth sensor in the sensor section 110 and GPC data concerning the current position outputted from the GPC receiving section to obtain the current position information. The current position information obtained as described above is stored in the memory 170 according to the necessity.

The processing section 180 has a prompt for inputting a destination for setting by carrying out an input operation in the terminal input section 130 displayed with the display control section 184 by controlling the terminal display section 140. When the user inputs a destination for setting by carrying out an input operation in the terminal input section 130, the destination recognizing section 182 acquires destination information concerning the inputted destination. The acquired destination information is stored in the memory according to the necessity.

When the user inputs a destination in the terminal input section 130, if the user demands to get information concerning the destination which is a point of the destination, the user carries out an input operation for demanding the point search information based on the screen display provided in the terminal display section 140. Upon the search demand for the point search information, the processing section 180 hierarchically searches, with the information searching section 189, for the search information concerning the destination by searching the mesh information at lower layers for each area by using, for instance, the map information MP, and acquires the search information correlated to the destination from the storage section 160. Then the processing section 180 has the acquired search information displayed on the terminal display section 140 by controlling the terminal display section 140 according to the necessity.

When the search information is, for instance, for displaying a specified area f the map information including the destination, or is inputted by a user having recognized the search information for setting a demand for display of a specific area by carrying out an input operation in the terminal input section 130, the processing section 180 has the display mesh information VMx for the corresponding area displayed by controlling the terminal display section 140 with the display control section 184. When the desired map information is displayed on the terminal display section 140, the user performs an input operation for displaying the destination point in the terminal input section 130, for instance, by moving the cursor displayed in a map display screen to the desired point according to the necessity. When this point information is identified, the destination recognizing section 182 in the processing section 180 recognizes the point information for the destination as destination information, and has the information stored in the memory 170 according to the necessity.

Further the processing section 180 has a prompt for inputting set items which are conditions for searching a traveling route by controlling the terminal display section 140 with the display control section 184. When the user inputs the set items for setting by carrying out an input operation in the terminal input section 130 according to an instruction on the displayed display screen, the processing section 180 acquires the set item information concerning the input set items (step S204). This acquired set item information is stored in the memory 170 according to the necessity.

Then the processing section 180 acquires the set item information stored in the memory 170 with the route processing section 188, and determines whether traffic jam estimation demand information is described in the set item information acquired described above or not (step S205).

When it is determined by the route processing section 188 in this step S205 that the traffic jam estimation demand information is not described therein, the processing section 180 acquires VICS data outputted from the VICS receiving section 120 with the traffic jam condition recognizing section 187. Then the processing section 180 generates the current traffic jam information for an area including the current position and the destination from the acquired VICS data. The acquired current traffic jam information is stored in the memory 170 according to the necessity.

The processing section 180 acquires the current position information, destination information, set item information, and current traffic jam information from the memory 170 with the route processing section 188. Then the processing section 180 executes the route search processing for searching a traveling route from the current position of the vehicle to the destination using the map information for searching a traveling route included in the map information and matching data MM stored in the storage section 160 (step S206).

More specifically, for instance, when a traveling route is a main road and the data is accumulated and maintained in the map information for searching a traveling road, the processing section 180 executes the route search processing by using the map information for searching a traveling route, and when the traveling route is a narrow road and the data is not accumulated in the map information for searching a traveling route, the processing section 180 searches a traveling route by using the matching data MM for zones from the narrow road to the main road. In this route search processing using the matching data MM, whether the node N indicates an identical point or not is determined by the coordinate matching section 186 and route search is performed by recognizing the road condition in relation to links L.

The route processing section 188 detects a plurality of candidate traveling routes, selects several traveling routes based on the acquired set item information or current traffic jam information to generate traveling route information concerning a plurality of, for instance, five candidate traveling routes each satisfying the user's desire. Further the route processing section 188 obtains a period of time required for the vehicle to travel up to the destination over each of the traveling routes indicated by the traveling route information to generate the required time information. Then the route processing section 188 has the traveling route information indicating the processed five candidate traveling routes displayed on the terminal display section 140 and also has a prompt for demanding a user to select one from the candidate traveling routes displayed. When the user carries out an input operation for selecting traveling route information for any candidate route, the traveling route is set.

On the other hand, when it is determined by the route processing section 188 in step S205 that the traffic jam estimation demand information is described therein, the processing section 180 acquires time information for the clock section 191 and recognizes a current date from the acquired time information. The processing section 180 acquires the calendar template 20 from the memory 170, and searches a classification ID number for the recognized date from the calendar template 20 acquired as described above to recognize the classification ID number (step S207). Further the processing section 180 acquires current position information and destination information stored in the memory 170 to recognize the current position and the destination. Then the traffic jam condition recognizing section 187 searches for and acquires the time-series data 12i corresponding to the recognized classification ID number and also including the current position and destination from the traffic jam estimation table 10 stored in the storage section 160 (step S208).

Then the processing section 180 executes the processing in step S206. More specifically, the processing section 180 generates current traffic jam information with the traffic jam condition recognizing section 187 and has the current traffic jam information stored in the memory 170 according to the necessity. Then the processing section 180 acquires the current position information, destination information, and set item information with the route processing section 188 from the memory 170. Based on the miscellaneous information acquired as described above, the processing section 180 detects a plurality of traveling routes, selects several ones from the detected traveling routes based on the acquired set item information, and generates the candidate traveling route information concerning the several candidate traveling routes satisfying conditions desired by the user.

Further the processing section 180 acquires with the traffic jam condition recognizing section 187 the current traffic jam information from the memory 170 and current date and hour from the clock section 191. Then the traffic jam condition recognizing section 187 computes estimated arrival time indicating estimated time for arriving a given place on the candidate traveling route indicated by the candidate traveling route information generated by the route processing section 188. Then the traffic jam condition recognizing section 187 estimates a condition of a traffic jam on a given place on each candidate traveling route at the estimated arrival time based on the time-series data 12i acquired in step S208, and generates the traffic jam estimation information concerning the estimated condition of traffic jam.

The processing section 180 executes, with the route processing section 188, the route setting processing for screen out several ones from the traveling routes in step S206 based on the current traffic jam information and traffic jam estimation information for the candidate traveling routes indicated by the candidate traveling route information. In this traveling route setting processing, screening of the traveling routes may be carried out based on only the traffic jam estimation information. Then the processing section 180 computes the required time up to the destination over each of the traveling routes selected out as described above to generate the required time information, and has the computed traveling route information displayed on the terminal display section 140 by controlling the display control section 184 and also has a prompt for demanding a user for selection of a candidate traveling route displayed thereon. When the user performs an input operation for setting any traveling route, the traveling route is set. When only one traveling route is set as a candidate traveling route, the prompt for demanding a user for selection of a candidate traveling route is not displayed, and the candidate traveling route is set as the traveling route.

Then the processing section 180 executes the processing for providing guidance by displaying the acquired map information by controlling the terminal display section 140 with the display control section 184 (step S209). In this processing for providing guidance, the processing section 180 acquires the matching data MM from the storage section 16. Then the processing section 180 subjects the acquired matching data MM to the coordinate matching processing with the coordinate matching section 186, recognizes a road condition, namely a connection of the road, and stores the information in the memory 170 according to the necessity. Further the processing section 180 has the traffic information icon C concerning traffic information such as traveling route information, traffic jam estimation information, required time information and current traffic jam information and the like for the traveling route selected by the user together with, for instance, the icon A indicating the current position of the vehicle based on the current position information as shown in Fig. 11 on the map information in the superimposed state respectively. Fig. 11 shows a case in which a traffic jam or congestion has not occurred on the display screen, and S in the figure indicates a start point of the traveling route, G in the figure indicates a destination through the traveling route, and a, b, c indicates places which the vehicle passes on the traveling route on the way to the destination.

Then the processing section 180 recognizes a traveling condition of the vehicle based on the data outputted from the speed sensor, azimuth sensor, and acceleration sensor in the sensor section 110 as well as GPS data outputted from the GPS receiving section. Further the processing section 180 provides the guidance information for travel of the vehicle based on the recognized traveling condition and the route guidance information included in the traveling route information with the guidance providing section 183 as displays on the terminal display section 140 or as voice output from the voice output section 150 to provide guidance for travel of the vehicle.

More specifically, the display control section 184 in the processing section 180 links the nodes N in the matching mesh information acquired from the storage section 160 with a polygonal line, processes the polygonal line based on the configuration of the road described in the link array block information constituting the matching data MM, and has the road in an area indicated by the matching mesh information MMx including the traveling route displayed on the terminal display section 140. Further the display control section 184 has the name information VMxA and the background information VMx, which are element data concerning elements constituting the map excluding roads in the area corresponding to the match mesh information MMx of the display mesh information acquired from the storage section 160, displayed in the superimposed state respectively. Then the display control section 184 further superimpose the current position on the map to be displayed and displays the current position in the superimposed state.

In this processing for displaying the current position on the map in the superimposed state, the display control section 184 executes the map matching processing based on the matching data MM so that the display based on the current position information for the vehicle is not off from a displayed road. Namely the display control section 184 corrects the current position information so that the current position to be displayed is positioned on the matching data MM for the traveling route and the displayed position is on a link array comprising a plurality of successive links L. As described above, the processing section 180 provides guidance by displaying the current position on the map in the superimposed state. When the current position reaches the specified position, as described above, the processing section 180 provides guidance for a traveling direction with displays or voices and the like. In the above description, the coordinate matching processing is executed when the matching data MM is acquired in step S209, but the configuration is allowable in which the coordinate matching processing is executed during or prior to the map matching processing.

The map of an area other than that described above, for instance, an area set for being displayed by input operation from the terminal input section 130, is also displayed with the display mesh information VMx acquired from the storage section 160 like in the case of display by searching.

In the processing for providing guidance, the processing section 180 executes the processing for changing a display area of the displayed map information, namely the processing for changing a reduction scale of the map information. More specifically, as shown in Fig. 10, the processing section 180 determines whether the current position is identical to the destination or not based on the current position information and the destination information (step 901). When it is determined that the current position is identical to the destination, the calendar changing section 190 reports it to the user as a display or an voice output and terminates the processing for providing guidance. When it is determined in step S901 that the current position is not identical to the destination, the processing section 180 acquires VICS data concerning traffic jams, traffic accidents, construction works, traffic regulations and the like, whether information and the like (step S902).

The traffic jam condition recognizing section 187 in the processing section 180 determines whether any change such as generation of a traffic jam, congestion, or a traffic accident, start of traffic regulation on the traveling route, reduction of traffic jams or congestion having already occurred, completion of cleaning-up of a traffic accident site, and deregulation has occurred between the traffic conditions when the traveling route is set and the current or estimated future conditions or not (Step S903). Recognition of any change in the traffic conditions in this step S903 is preferably made by recognizing a running direction of a vehicle, for instance, with the azimuth sensor, acquiring running direction information in which the vehicle is running for based on a signal outputted from this azimuth sensor, and recognizing any change in traffic conditions forward in the running direction in which the vehicle is running. Namely, even if any change has occurred backward, the change gives no influence to the vehicle, and with this configuration, workload for the processing can be reduced and the processing can be made at a high speed easily. In step S903, when the traffic jam condition recognizing section 187 recognizes no change in the traffic conditions, the system control returns to step S901 to again execute the processing. Further in step S903, when the traffic jam condition recognizing section 187 recognizes any change in the traffic conditions, the traffic jam condition recognizing section 187 recognizes a position at which the change has occurred or information concerning the change in the traffic conditions (step S904).

Then the display control section 184 determines whether the position at which the change in traffic conditions recognized by the traffic jam condition recognizing section 187 is inside the display area 141 currently being displayed as shown in Fig. 11 or not (step S905). When it is determined that the site where the change in traffic conditions has occurred is not outside the display area 141, namely within the display area 141, the display control section 184 executes the processing for displaying the changed traffic conditions, for instance, in the flashing state based on the information for the change in the traffic conditions to differentiate the side from others (step S906), and then returns to step S901 to again execute the processing.

When it is determined in step S905 that a position C of the area in which the change in traffic conditions has occurred and, for instance, a traffic jam has occurs, is outside the display area 141 for providing guidance as shown, for instance, in Fig. 11, the display control section 184 once stores the display area 141 for the map information having been displayed in the memory 170. Further, as shown in Fig.12, the display control section 184 changes the display area 142 for map display to an area including the icon A which is image information corresponding to the current position information and the position C at which the change in traffic conditions has occurred, namely changes the display areas 142 to the state in which the reduction scale becomes larger, and executes the processing for having also this display area 142 stored in the memory 170 (step S907). Fig. 11 and Fig. 12 each show a case wherein occurrence of a traffic jam at a position which the vehicle will pass in one hour is estimated. Further in zoom-out display as shown in Fig. 12, the display control section 184 has the estimated position of the vehicle at which a change in traffic conditions is estimated and recognized by the route processing section 188 displayed on the icon B, which is image information, in the superimposed state. Further also the configuration is allowable in which a display indicating that the estimated traffic jam will occur in one hour or time at the estimated position is provided in a balloon state, for instance, near the icon B or the like. Change from the display area 141 for this map information from the display area 142 is made in the state in which the reduction scale for the so-called free zoon out becomes successively larger. Also the configuration is allowable in which simply the display area 141 is switched to the display area 142, and there is no specific restriction over a method of changing the display area.

After the fee zoom-out processing in step S907, the display control section 184 in the processing section 180 determines whether the state of fee-zoom-out has passed a prespecified period of time or not (step S908). When it is determined in step S908 by the display control section 184 that the prespecified period of time has passed, the display control section 184 restores the original display area 141, namely executes the processing for display the map information with the display area 141 previously stored in the memory 170 (step S909). In this step, the display control section 184 executes the so-called free zoom-in processing in which the reduction scale becomes successively smaller in contrast to the so-called fee zoom-out. Also the configuration is allowable in which the display area 142 is simply switched back to the display area 141.

When it is determined in step S908 that the prespecified period of time has not passed, the display control section 184 determines whether there has been issued a demand for display of details or not (step S910). Namely the display control section 184 determines whether an input operation was made in the terminal input section 130 for demanding change of the reduction scale for a display area 143 which is detailed map information for an area near the site of the change in traffic conditions, namely which is an area indicated by the chain double-dashed line in Fig. 12 and also an area near the site of the change in traffic conditions as shown in Fig. 13. When the demand for detailed display is not recognized, the display control section 184 returns to step S908. On the other hand, when the demand for detailed display is recognized in step S910, the display control section 184 execute the processing for displaying the detailed map information as shown in Fig. 13, namely the so-called free zoom-in processing (step S911).

After the so-called free zoom-in processing in step S911, the display control section 184 in the processing section 180 determines whether the free zoom-in state has passed a prespecified period of time or not (step S912). When it is determined in this step S912 that the prespecified period of time has passed, the display control section 184 returns to step S907, and executes the processing for changing the reduction scale for switching the display area 143 to the display area 142. Further, when it is determined in step S912 that the prespecified period of time has not passed yet, the display control section 184 determines whether an input operation for restoring display of the original display area 141 was performed in the terminal input section 130 or not (step S913). When a demand signal for switching to the display area 141 is not recognized, the display control section 184 returns to step S912. On the other hand, when it is recognized in step S913 that the demand for switching to the original display area 141 has been issued, the display control section 184 goes to step S909. Also the configuration is allowable in which, in step S913, the demand for switching to the display area 142 can be recognized, or a demand for switching to either one of the display area 141 and display area 142 can be recognized so that the area to be displayed is switched according to the demand.

As described above, the area to be displayed is changed according to the necessity, and when a user recognizes changes in traffic conditions and determines, for instance, that a traffic jam has occurred or is expected to occur and smooth running is impossible, the user again changes the current traveling route and searches a new traveling route, namely performed an input operation for demanding reroute processing in the terminal input section 130. Then like in the processing for setting the traveling route, described above, the processing section 180 generates candidate traveling route information based on the conditions such as the shortest time to the destination or the shortest range to the destination making use of the current traffic jam information of traffic jam estimation information and the like, and again execute the processing for guidance based on a traveling route set anew.

### (Advantages of the first embodiment)

From the above, the first embodiment described above has the configuration in which the route processing section 188 sets a traveling route of a vehicle based on the current position information recognized by the current position recognizing section 181, the destination information recognized by the destination recognizing section 182, and the map information stored in the storage section 160, then the display control section 184 superimposes the traveling route set as described above on the map information to display the traveling route in the terminal section 140 with the prespecified display area 141. When any change in the traffic conditions is recognized over the traveling rout set as described above based on the traffic information such as VICS data concerning traffic conditions, current traffic information, and traffic jam estimation formation recognized by the traffic jam condition recognizing section 187, if the area in which the change in the traffic conditions has occurred is outside the display area 141 in the map information currently being displayed, the display control section 184 executes the processing for changing the reduction scale for displaying an area including the position in which the change in the traffic conditions has occurred with the display area 142. Because of this feature, it is possible to facilitate the recognition of changes in the traffic conditions and the determination, for instance, whether to continue running or avoid the site where the change in the traffic conditions has occurred, or from where to avoid and the like, so that it is possible to provide effective traffic conditions and better guidance to users.

When the area in which the change in the traffic conditions has occurred is outside the display area 141, the display control section 184 automatically switches to the display area 142. Because of this feature, an additional input operation for switching the display is not required, so that excellent usability is ensured with the convenience improved for users.

Recognition of any change in the traffic conditions is made by recognizing a running direction of a vehicle, for instance, with the azimuth sensor, to recognize whether or not a change in traffic conditions has occurred on the running direction side which is forward in the direction in which the vehicle is running. Because of this feature, even if there has occurred any change backward in which the vehicle has passed, the change gives no influence to the vehicle, by executing the processing for recognizing a change of traffic conditions in the limited range forward in the direction in which the vehicle is running, workload for the processing can be reduced and the processing can be made at a high speed easily.

The display control section 184 changes the display areas 141 to 143 so that the reduction scale varies in the substantially successive mode like in the so-called free zoom-out or free zoom-in. Because of this feature, it is possible to make users easily recognize the position at which the change in the traffic conditions has occurred with visibility further improved.

Further the display control section 184 changes to the display area 142 for displaying an area including the current position, namely the icon A indicating the current position of the vehicle corresponding to the current position and the position C at which the change of the traffic jam conditions has occurred. Because of this feature, it is possible to make users recognize the positional relation between the current position and the position C at which the change in the traffic conditions has occurred more specifically, so that better guidance can be provided.

When the display control section 184 displays the display area 142, if the change in the traffic conditions is a traffic jam which is estimated to occur in one hour as shown, for instance, in Fig. 11 and Fig. 12, the estimated position of the vehicle corresponding to the given hour is recognized by the traffic jam condition recognizing section, and the display control section 184 displays the icon B corresponding to the estimated position in the superimposed state. Because of this feature, it is possible to make users recognize the relation between the contents of the changing traffic conditions and the running vehicle more in detail, so that better guidance can be provided.

When the change in the traffic conditions is based on the estimated traffic jam information in the future, the display control section 184 displays the period of time from the current time to the time when the change in the traffic conditions will occur as well as the hour of the occurrence of the change in the traffic conditions, and because of this feature, it is possible to make users recognize changes in the traffic conditions more in detail, so that better guidance can be provided. Further, by displaying the period of time from the current time to the time when the change in the traffic conditions occurs as well as the estimated position of the vehicle corresponding to the given hour with the icon B, it is possible to make users recognize the relation between the vehicle and the changing traffic conditions more specifically, so that better guidance can be provided.

The display control section 184 also displays the contents of the change in the traffic conditions in the display state different from that for other traffic conditions, such as, for instance, flashing state. Therefore, with the simple configuration in which the display state is differentiated according to the traffic conditions, for instance, using flashing state, it is possible to make users recognize the changed traffic conditions more specifically.

The display control section 184 enables the display of the contents of the change in the traffic conditions to be switched to the display area 143 for displaying the vicinity of the position at which the change in the traffic conditions has occurred, while keeping the contents displayed in the display area 142. Because of this feature, it is possible to recognize the contents of the changed traffic conditions more in detail, so that better guidance can be provided for users.

The display control section 184 automatically switches the display back to the original display area 141 after the prespecified period of time has passed. Because of this feature, an input operation for switching the area to be separately displayed to the display area 141 is not required, so that excellent usability is ensured with the convenience improved for users.

With the configuration in which the area to be displayed can be switched from the display area 143 not only to the display area 141 but also to the display area 142 by issuing a demand for switching to the display area 142, the area to be displayed can be switched to according to each user's demand, so that it is possible to provide excellent usability and the improved convenience for users.

The traffic jam estimation information is generated by making use of the traffic jam estimation table 10 which is statistic traffic information obtained by statistically processing information on traffic conditions in the past. Because of this feature, the workload for the processing is small compared with the case in which a special simulation program is employed for estimating traffic jams and the processing for computing the estimation of traffic jam conditions generated at each of the specified points of time can be performed at a relatively high speed, so that the transition of the traffic jam conditions based on the traffic jam estimation can rapidly be made and the guidance as better navigation can easily be provided.

There is provided the calendar template 20 for correlating the traffic jam estimation table 10 to the dates in the calendar template. Namely, calendar template 20 has a tabular structure in which classification ID numbers changeable and corresponding to the date classification IDs 11 in the traffic jam estimation table are correlated to the date information concerning dates in the calendar. Therefore, estimation of the traffic jams can appropriately made even with the traffic jam estimation table 10 which is the data in the past, and better navigation can be provided. Furthermore, the classification ID numbers corresponding to the traffic jam estimation table can be changed to the dates in the calendar template 20. Because of this feature, when the estimation result is different from the current traffic condition, the classification ID number can be changed to the number corresponding to the time-series data in the traffic jam estimation table reflecting the current conditions, so that estimation of traffic jams can be made more appropriately.

### [Second Embodiment]

Next a second embodiment of the present invention is described with reference to the related drawings. In this embodiment, description is made for a communication type of navigation system as a traffic condition reporting system according to the present invention, and the navigation system has the configuration in which guidance is provided for running as a traveling condition of a movable body such as, for instance, a vehicle. The traffic condition reporting system according to the present invention is not limited to the configuration for providing guidance for running of a vehicle, and is applicable to any configuration for providing guidance concerning traffic conditions to any type of movable body.

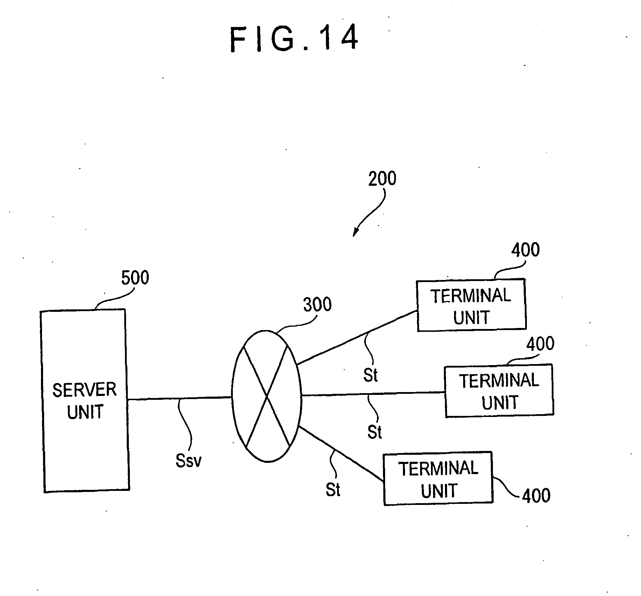

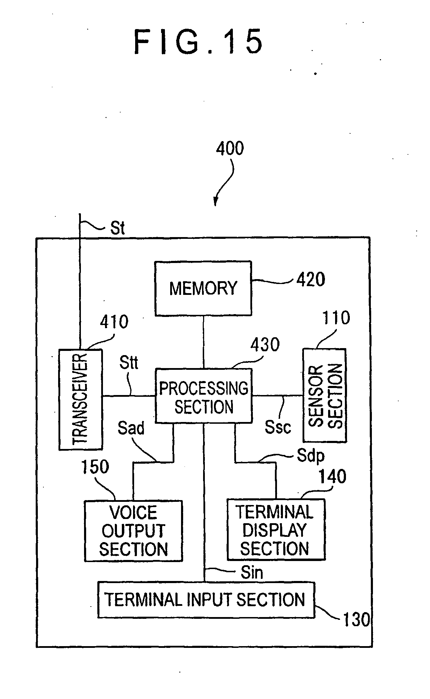

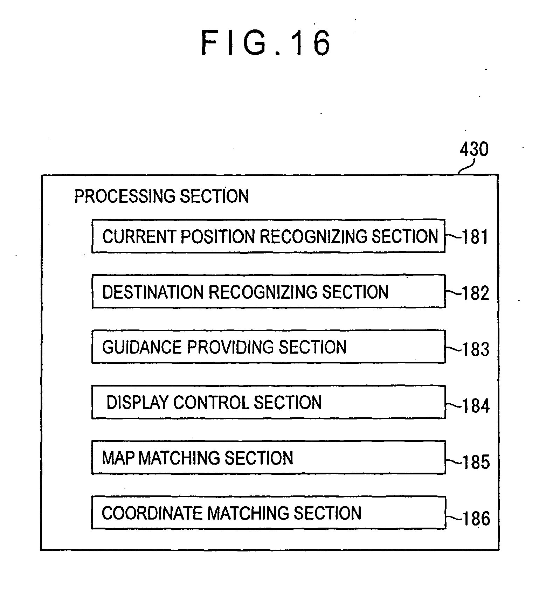

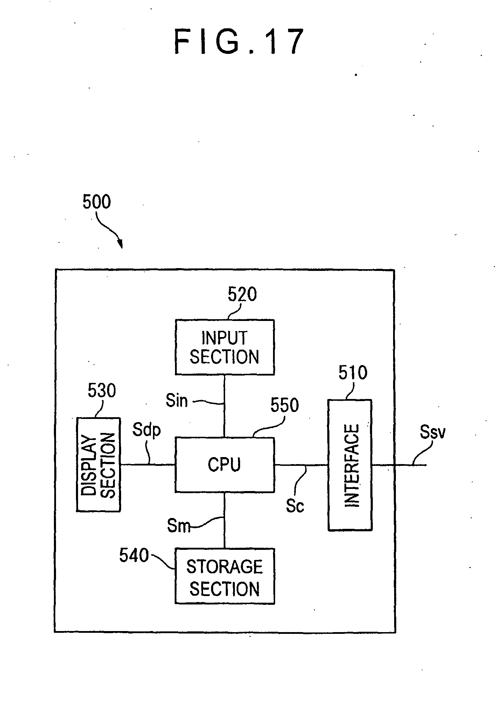

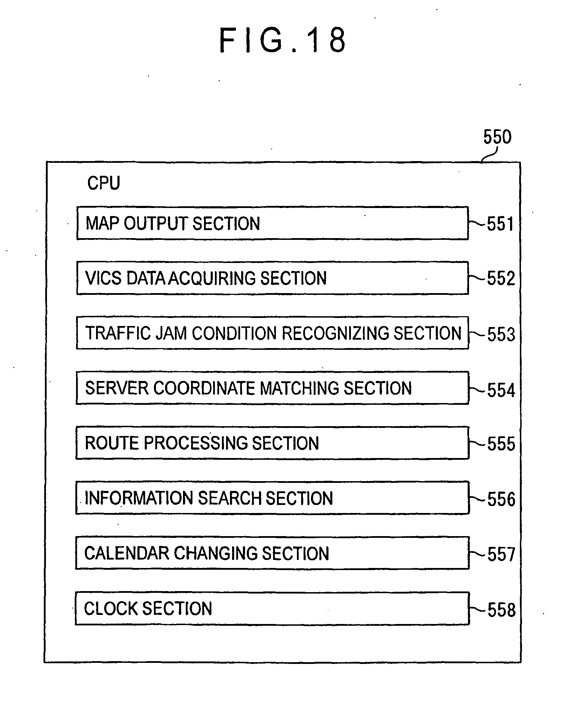

Fig. 14 is a block diagram showing general configuration of a navigation system according to the present invention. Fig. 15 is a block diagram showing general configuration of a terminal unit. Fig. 16 is a block diagram showing general configuration of a processing section in the terminal unit. Fig. 17 is a block diagram showing general configuration of a server unit. Fig. 18 is a block diagram showing general configuration of a CPU of the server unit. The same reference numerals are assigned to the same components as those in the first embodiment, and detailed description thereof is omitted herefrom.

### [Configuration of the Navigation System]

In Fig. 14, the reference numeral 200 indicates a communication type of a navigation system as a traffic condition reporting system, and this navigation system 200 is a system for providing guidance for travel in response to a traveling condition of a movable body such as, for instance, a vehicle. The movable body is not limited to a vehicle, and this navigation system 200 is applicable to any type of movable body such as an airplane, and a vessel. The navigation system 200 comprises a network 300, a terminal unit 400 also functioning as a traffic condition reporting device, and a server unit 500.

Connected to the network 300 are the terminal unit 400 and the server unit 500. The network 300 connects the terminal unit 400 to the server unit 500 in the state where transaction of information can be carried out. As the network 300, there can be enlisted, for instance, the Internet based on a general purpose protocol such as TCP/IP, an intranet, a LAN (Local Area Network), a network such as a communication network or a broadcasting network comprising a plurality of base stations enabling information transaction over a radio medium, and a radio medium itself functioning as a medium for direct transaction of information between the terminal unit 400 and the server unit 500. Any of electric waves, light, sonic waves, electromagnetic waves and the like may be used as the radio medium.

As the terminal unit 400, like in the case of the navigation device 100 according to the first embodiment, there can be enlisted, for instance, an in-vehicle or portable type of navigation device, a PDA (Personal Digital Assistant), a mobile telephone, a PHS (Personal Handyphone System), a portable personal computer, and the like. This terminal unit 400 acquires map information distributed via the network 300 from the server unit 500, and provides, based on the map information, information concerning a current position or a destination, displays for route search up to the destination, information for searching and display of a nearest specified store, information concerning contents of the services provided at each store and the like. The terminal unit 400 comprises, as shown in Fig. 15, a transceiver 410 as a terminal communication section, a sensor section 110, a terminal input section 130, a terminal display section 140, a voice output section 150, a memory 420, and a processing section 430 and the like.

The transceiver 410 is connected via the network 300 to the server unit 500, and also is connected to the processing section 430. The transceiver 410 can receive a terminal signal St via the network 300 from the server unit 500, and when the terminal signal St is received, the transceiver 410 executes the preset interface processing, and outputs the signal as a processed terminal signal Stt to the processing section 430. Further transceiver 410 can receive the processed terminal signal Stt from the processing section 430, carries out the preset output interface processing upon reception of this processed terminal signal Stt, and transmits the signal as a terminal signal St via the network 300 to the server unit 500.

The sensor section 110 detects a raveling state of a vehicle, namely a current position or a running condition thereof and outputs the detected information as a specific signal Ssc to the processing section 430.

The terminal input section 130 has operation buttons or operation knobs (not shown) and used for input operations. The operation buttons or operation knobs are used to input set items for setting contents of operations of the terminal unit 400 and the like. More specifically, as the set items, there can be enlisted, for instance, an instruction for execution of an communication operation which is communication demand information for acquiring information through the network 300, contents of information to be acquired or conditions for acquiring the information, setting of a destination, information search, display of a running state which is a traveling condition of a vehicle, and changing of a display format and an area to be displayed. When an input operation for setting is performed, the terminal input section 130 outputs a preset signal Sin to the processing section 430 according to the necessity for setting.

The terminal display section 140 is controlled by the processing section 430 and has a signal Sdp for image data from the processing section 430 displayed on the screen thereof. The image data includes, for instance, those for map information or searched information transmitted from the server unit 500.

The voice output section 150 is controlled by the processing section 430 and outputs various types of signals Sad such as voice data from the processing section 430 as voices from the voice generating section for reporting.

The memory 420 stores therein miscellaneous information acquired via the network 300, set items inputted in the terminal input section 130, or musical data or image data and the like. Further the memory 420 stores therein various types of programs developed on the OS (Operating System) for controlling operations of the entire terminal unit 400. Further, the memory 420 may comprise a drive or a driver for storing information in a recording medium such as a HD (Hard Disk) or an optical disc in the readable form.

The processing section 430 comprises various types of I/O ports such as, for instance, a communication port to which the transceiver 410 is connected, a GPS receiving port to which the GPS receiving section of the sensor section 110 is connected, a sensor to which various sensors in the sensor section 110 are connected respectively, a key input port to which the terminal input section 130 is connected, a display control port to which the terminal display section 140 is connected, a voice control port to which the voice output section 150 is connected, a memory port to which the memory 420 is connected, and the like. As shown in Fig.16, the processing section 430 comprises, as various types of programs, a current position recognizing section 181 as a current position information acquiring section, a destination recognizing section 182 as a destination information acquiring section, a guidance providing section 183, a display control section 184, a map matching section 185, a coordinate matching section 186, and the like.

The current position recognizing section 181 recognizes a current position of a vehicle. The miscellaneous information obtained by the current position recognizing section 181 is stored in the memory 420 according to the necessity.

The destination recognizing section 182 acquires destination information concerning a destination set and inputted, for instance, in response to an input operation in the terminal input section 130, and recognizes a position of the destination. Then the destination information recognized in the destination recognizing section 182 is stored in the memory 420 according to the necessity.

The guidance providing section 183 provides guidance for traveling of a vehicle or guidance with contents, for instance, for assisting running of a vehicle based on the traveling route information or geographical guidance information stored in the memory 420 and previously acquired in response to a running condition of the vehicle.

The display control section 184 displays miscelloneous information on a screen of the terminal display section 140 to report the information to a user and also provides controls for changing a display area of the map information to be displayed.

The map matching section 185 executes, based on the map information acquired from the server unit 500, the map matching processing for having the current position recognized by the current position recognizing section 181 displayed in the appropriate state.

The coordinate matching section 186 executes the coordinate matching processing, namely determines whether the point information, which is information concerning the node N in the matching data MM in the map information acquired from the server unit 500, is identical to the current position recognized by the current position recognizing section 181 or not.

The server unit 500 can transact information with the terminal unit 400 via the network 300. The server unit 500 can acquire miscellaneous information via the network 300 from servers (not shown) installed in the various government institutions such as the Meteorological Office, the Tokyo Metropolitan Office Department, private organizations, VICS, and business organizations and the like. The obtained information includes, but not limited to, for instance, weather information, VICS data concerning traffic jams, traffic accidents, construction works, traffic regulations and the like, store information concerning various types of stores such as gas stations, restaurants and the like, information concerning traveling of a vehicle, namely miscellaneous information used when the vehicle travels. The server unit 500 comprises, as shown in Fig. 17, an interface 510 functioning as a current position information acquiring section and a destination information acquiring section, an input section 520, a display section 530, a storage section 540, a CPU (Central Processing Unit) 550, and the like.

The interface 510 executes the input interface processing preset to a server signal Ssv inputted via the network 300, and outputs the signal as a processing server signal Sc to the CPU 550. When the processing server signal Sc to be transmitted to the terminal unit 400 is inputted from the CPU 550, the interface 510 executes the output interface processing previously set to the input processing server signal Sc, and outputs the signal as a server signal Ssv via the network 300 to the terminal unit 400. It is to be noted that also the configuration is allowable in which the server signal Ssv is outputted only to the terminal unit 400 according to the necessity based on the information described in the processing server signal Sc.

The input section 520 is, like the terminal input section 130, a keyboard or a mouse like the terminal input section 130, and has various types of operation buttons or operation knobs (not shown). These operation buttons or operation knobs are used for setting contents of operations of the server unit 500, for setting and inputting information to be stored in the storage section 540, for setting updating information stored in the storage section 540, and for other purposes. When an operation is performed for inputting a set item, the input section 520 outputs a signal Sin corresponding to the set item Sin to the CPU 550 for setting. The operation is not limited to those with the operation buttons or operation knobs, and also the configuration is allowable in which each set item is inputted by operating a touch panel provided in the display section 530 or with voices.

The display section 530 has, like the terminal display section 140, an image data signal Sdp from the CPU 550 displayed on a screen thereof under controls by the CPU 550. As the image data, there can be enlisted, for instance, image data from the storage section 540 or those acquired from an external server via the network 300.

The storage section 540 stores the miscelloneous information received from the terminal unit 400 or an external server, the map information as shown, for instance, Fig. 2 and Fig. 3, the traffic jam estimation table 10 as shown in Fig. 4 or the like in the readable state. Further the storage section 540 stores therein the calendar template 20 correlated to the terminal units 400 connected via the network 300 to the server unit 500 in the readable form. More specifically, the storage section 540 comprises, various information storage area in which miscellaneous information (not shown) is stored, a map information storage area as a map information storage section in which map information is stored, a traffic jam estimation table storage area as a statistic traffic information storage section in which the traffic jam estimation table 10 is stored, a calendar storage area in which the calendar template 20 is stored, and the like.

The above description assumes the configuration in which the storage section 540 comprises the four storage areas as described above, but also the configuration is allowable, for instance, in which any of the storage areas described above is not provided in the storage section 540, or in which other additional storage areas are provided therein. The storage section 540 may comprise a drive or a driver for storing information in a recording medium such as a HD (Hard Disc), a DVD (Digital Versatile Disc), an optical disc, a memory card, and the like. As the information stored in the storage section 540, also the information inputted, for instance, in response to an input operation in the input section 520 may be stored therein so that the contents of the information can be updated according to the necessity. Further various types programs developed on the OS (Operating System) for controlling operations of the entire server unit 500 and those of the navigation system 200 are also stored in the storage section 540.

The storage section 540 stores therein search information for acquiring, for instance, information for a specified point in the map information. Namely the search information is one concerning contents and guidance, such as names of prefectures, cities, towns, villages, and places which are successively subdivided on the map information, information concerning stores at each place, and information to a search demand from the terminal unit 400, and the search information has a tabular structure based on the tree structure in which a plurality of information sets for various items are correlated to each other in the hierarchical state.

Further the storage section 540 stores therein personal information concerning users of the navigation system 200 by using the terminal unit 400. The personal information includes, in addition to a user's name, the user's address, and an ID number or a password assigned to the user, a form of the terminal unit 400 used to utilize the navigation system 200, an address number for information transaction with the terminal unit 400, and the like. In addition, the storage section 540 stores therein miscellaneous information used for utilization of the navigation processing so that the information can be read out by the CPU 550 according to the necessity.

As shown in Fig. 18, the CPU 550 comprises, as various types of programs stored in the storage section 540, a map output section 551, a VICS data acquiring section 552 as a traffic information acquiring section, a traffic jam condition recognizing section 553 as a traffic information acquiring section, a server coordinate matching section 554, a route processing section 555 as a map information acquiring section and a traveling route search section, an information search section 556, a calendar changing section 557, a clock section 558.

The map output section 551 searches, based on the inputted processing server signal Sc, and in response to information demanding distribution of information concerning the map information described in this processing server signal Sc, the demanded information in the map information stored in the storage section 540 such as display data VM or matching data MM corresponding to, for instance, a specific area, and reads out the information as a memory signal Sm. Then the map output section 551 converts the read-out memory signal Sm to the processing server signal Sc according to the necessity, outputs the processing server signal Sc via the interface 510 as well as the network 300 to a specified one or all of terminal units 400 for distributing the demanded map information.

The VICS data acquiring section 552 acquires, like the VICS receiving section 120 in the first embodiment, the VICS data from a VICS (not shown) based on the inputted processing server signal Sc and in response to information demanding search of a route described in the processing server signal Sc.

The traffic jam condition recognizing section 553 generates current traffic jam information as a memory signal Sm from the acquired VICS data acquired by the VICS data acquiring section 552 based on the inputted processing server signal Sc and in response to information concerning a demand for searching a route descried in this processing server signal Sc. Further traffic jam condition recognizing section 553 executes the processing similar to that performed by the traffic jam condition recognizing section 187 in the first embodiment and generates traffic jam estimation information as a memory signal Sm based on the inputted processing server signal Sc and in response to the traffic jam information and further information concerning a route search demand reflecting a result of traffic jam estimation each described in this processing server signal Sc. Then traffic jam condition recognizing section 553 converts the memory signal Sm generated as described above to the processing server signal Sc according to the necessity, and outputs the signal to specified one or all of the terminal units 400 via the interface 510 and the network 300 according to the necessity to report conditions of a current traffic jam or those estimated to occur before the vehicle arrives at the destination to the user.

The server coordinate matching section 554 executes, like the coordinate matching section 186 in the terminal unit 400 described above, the coordinate matching processing to determine whether the point information, which is information concerning the node N for matching data MM in the map information, indicates an identical point or not.

The route processing section 555 executes the processing similar to that executed by the route processing section 188 in the first embodiment based on the inputted processing server signal Sc and in response to information for demand search of a route described in this processing server signal Sc, and generates the traveling route, required time information and the like as a memory signal Sm. Then the route processing section 555 converts the generated memory signal Sme to the processing server signal Sc according to the necessity, and outputs the signal to a specified one or all of the terminal units 400 to provide information concerning the traveling route or the required period of time.

The information search section 556 searches the search information stored in the storage section 540 hierarchically, for instance, based on the item information like the information searching section 189 in the first embodiment based on the inputted processing server signal Sc and in response to the information concerning a demand for searching the search information described in this processing server signal Sc, and reads out the information as a memory signal Sm. Then information search section 556 converts the read-out memory signal Sm to the processing server signal Sc according to the necessity, and outputs the signal via the interface 510 and the network 300 to a specified terminal unit 400 based on the processing server signal Sc to distribute the search information.

The calendar changing section 557 recognizes, based on the inputted processing server signal Sc, calendar change demand information for demanding change of the calendar template 20 described in the processing server signal Sc and terminal-specific information identifying, for instance, an ID number identifying the terminal unit 400 having generated this calendar change demand information. Then the calendar changing section 557 updates the calendar template 20 correlated to the terminal unit 400 identified by the terminal-specific information stored in the storage section 540 and in the storage section 540, like the calendar changing section 190 according to the first embodiment, according to the necessity.

The clock section 558 recognizes current time based on a reference pulse such as, for instance, an internal clock. Then the clock section 558 outputs time information concerning the recognized current time according to the necessity.

Further the CPU 550 execute processing for computing in response to an input operation and based on the signal Sin inputted from the input section 520 in response to the input operation in the input section 520 to generate the signal Sdp or the like according to the necessity. Then the CPU 550 outputs the generated signal Sdp to the display section 530, interface 510, and storage section 540 according to the necessity so that the inputted instruction is executed.

### [Operations of the Navigation System]

Next operations of the navigation system 200 are described with reference to the related drawings. In the following descriptions, the substantially same operations as those in the first embodiment are described simply.

### (Processing for changing a calendar template)

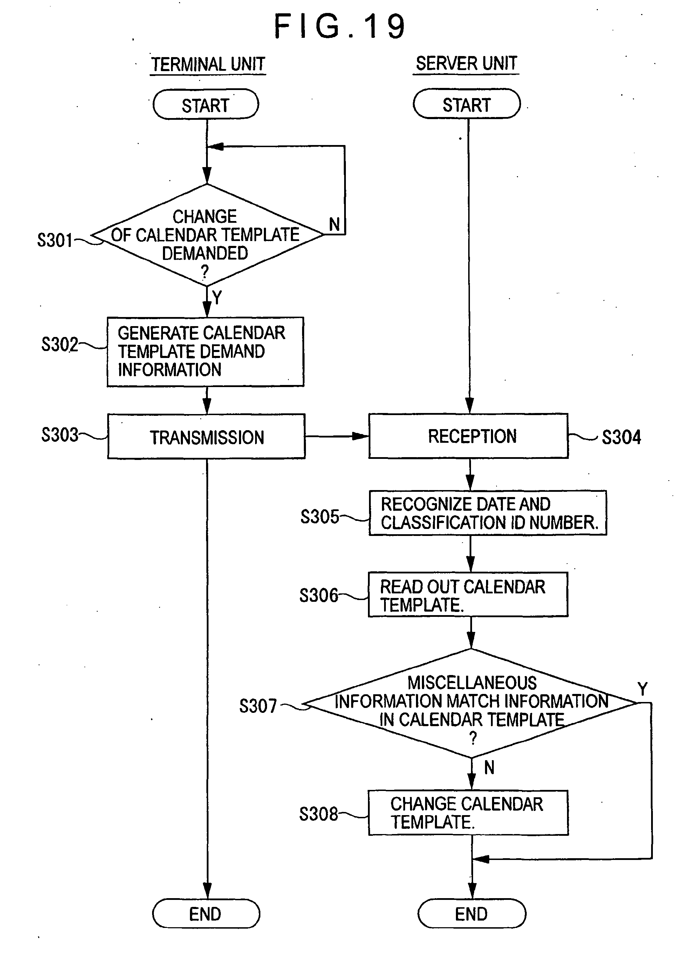

At first, as one of operations carried out by the navigation system 200, the processing for changing the calendar template 20 is described with reference to Fig. 19. The following description assumes the case in which a user performs the processing for changing the calendar template 20 as shown in Fig. 5 and stored in the storage section 540 in the server unit 500, for instance, based on the information acquired by the user through various types of broadcasting such as radio broadcasting or television broadcasting and indicating that, for instance, a festival will be held on 5^{th} in City A. Fig. 19 is a flow chart showing the processing for changing a calendar template.

At first, a user, who is a passenger on a vehicle, turns on the power of the terminal unit 400 to supply power thereto. When power is supplied to the terminal unit 400, the processing section 430 has a main menu displayed by controlling the terminal display section 140 and also has a prompt to the user for inputting contents of operations of the terminal unit 400 displayed on a screen of the terminal display section 140.

Then, as shown in Fig. 19, the user inputs, for instance, an instruction for execution of the processing for changing the calendar template 20 by performing an input operation in the terminal input section 130. When the processing section 430 recognizes the input operation for execution of the processing for changing the calendar template 20, with the calendar changing section 557 (step S301), the processing section 430 has a display screen prompting the user to perform an input operation for setting date information or even information required for changing the calendar template 20 displayed on the terminal display section 140.

When the user performs an input operation for setting date information and even information by performing an input operation in the terminal input section 130 according to an instruction displayed on the screen, the processing section 430 recognizes the inputted date information, event information or the like. Then the processing section 430 generates calendar change demand information describing the recognized date information, event information and the like (step S302), and transmits the generated calendar change demand information with the transceiver 410 via the network 300 to the server unit 500. When transmitting the calendar change demand information, the processing section 430 also transmits terminal-specific information identifying the terminal unit 400 (step S303).

When the server unit 500 receives the calendar change demand information and the terminal-specific information transmitted from the terminal unit 400 (step S304), the server unit 500 executes the processing for recognizing the date information and event information described in the received calendar change demand information with the calendar changing section 557 (step S305). More specifically, the server unit 500 recognizes the date identified by the date information as 5^{th} and also recognizes the classification ID number correlated to the event information as "ID4".

Then the calendar changing section 557 reads out the calendar template 20 correlated to the terminal unit 400 having transmitted the calendar change demand information from the storage section 540 based on the terminal-specific information received in step S304 (step S306). Then the calendar changing section 557 determines whether the information recognized in step S305 is identical to the information concerning the calendar template 20 read out in step S306 or not (step S307).

When it is determined that the information recognized in step S305 is identical to the information concerning the calendar template 20 read out in step S307, the calendar changing section 557 terminates the processing without changing the calendar template 20. On the other hand, when it is determined that the information recognized in step S305 is not identical to the information concerning the calendar template 20 read out in step S306, the calendar changing section 557 changes the calendar template 20 based on the information recognized in step S305 (step S308). More specifically, as the classification number for 5^{th} recognized in step S305 is "ID4" and the classification ID number for 5^{th} recognized from the calendar template 20 is "ID 1", so that the calendar changing section 557 changes the classification ID number for 5^{th} from "ID1" to "ID4" as shown in Fig. 9. Then the calendar changing section 557 has the calendar template 20 with the classification ID number having been changed correlated to the terminal unit 400 having transmitted the calendar change information and stored in the storage section 540 and then terminates the processing.

### (Processing for searching a traveling route)

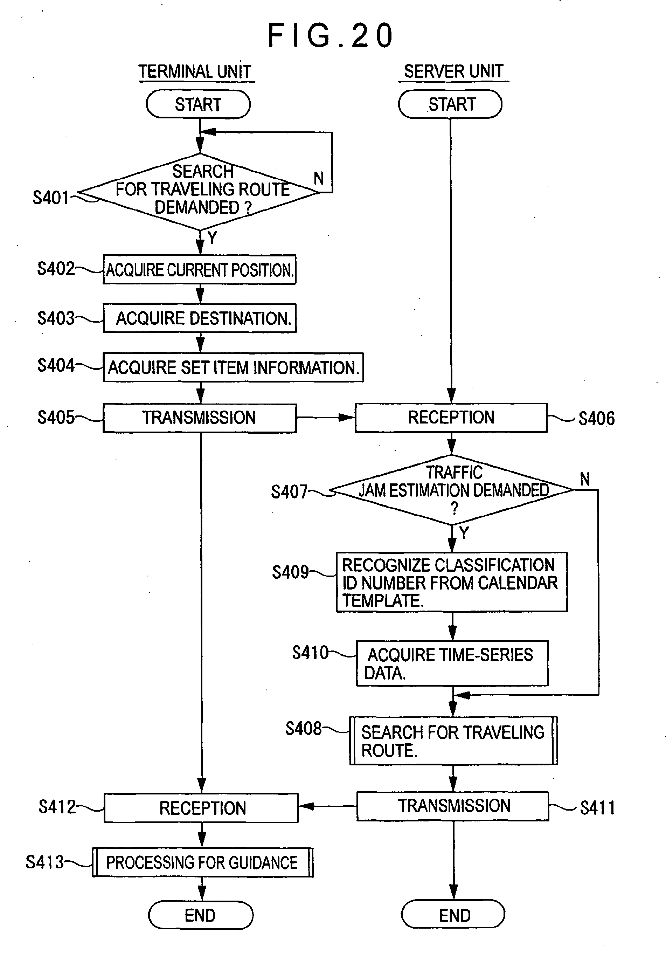

As one of operations performed by the navigation system 200, the processing for searching a traveling route is described with reference to Fig. 20. Fig. 20 is a flow chart showing the processing for searching a traveling route in the navigation system.

At first, as shown in Fig. 20, a user performs an input operation, for instance, for executing the processing for searching a traveling route by operating the terminal input section 130. When the processing section 430 recognizes the input operation for execution of the processing for searching a traveling route (step S401), the processing section 430 has a display screen prompting a user to input and set the various information required for searching a traveling route such as set item information concerning a destination, a route concerning the shortest distance or requiring the shortest period of time, or concerning traffic jam estimation displayed on the terminal display section 140.

When the processing section 430 recognizes the information required for searching a traveling route with the route processing section 555, at first the processing section 430 acquires current position information concerning a current position with the current position recognizing section 181 (step S402), and also acquires the inputted destination information concerning a destination with the destination recognizing section 182 (step S403). Further the processing section 430 acquires the set item information concerning inputted set items (step S404). The current position information, destination information, and set item information are stored in the memory 420 according to the necessity.

Then the processing section 430 executes the processing for transmitting the current position information, destination information, and set item information stored in the memory 420 together with the signal for demanding search of a traveling route to the server unit 500 by controlling the transceiver 410. When transmitting the information, the processing section 430 also transmits the terminal-specific information identifying the terminal unit 400 (step S405).

When the server unit 500 receives the miscellaneous information transmitted from the terminal unit 400 via the interface 510 and the network 300 (step S406), the server unit 500 determines with the route processing section 555 in the CPU 550 whether the traffic jam estimation demand information is described in the received set item information (step S407).

In this step S407, when it is determined that the traffic jam estimation demand information is not described in the received set item information, the CPU 550 acquires VICS data with the VICS data acquiring section 552. Then the CPU 550 generates, with the traffic jam condition recognizing section 553, the current traffic jam information for an area including the current position and the destination from the acquired VICS data. Then the CPU 550 execute, with the route processing section 555, the route search processing for searching a traveling route from the current position of the vehicle to the destination based on the current position information, destination information, set item information, current traffic jam information (step S408).

More specifically, the route processing section 555 generates information for several traveling routes satisfying the user's desire by using the map information stored in the storage section 540. Then, like in the first embodiment, the route processing section 555 computes a period of time required for the vehicle to run up to the destination over each of the selected traveling routes indicated by the information, and generates the required time information.

On the other hand, when it is determined by the route processing section 555 in step S407 that the traffic jam estimation demand information is described therein, the route processing section 555 acquires the time information from the clock section 558, and recognizes the current date from the acquired time information. Then the CPU 550 reads out the calendar template 20 correlated to the terminal unit 400 having demanded route search from the storage section 540 based on the terminal-specific information in step S406 with the traffic jam condition recognizing section 553. Then the CPU 550 searches and recognizes the classification ID number for the date recognized from the read-out calendar template 20 (step S409). Further the CPU 550 recognizes the current position and the destination from the current position information and destination information received in step S406. Then the traffic jam condition recognizing section 553 searches and acquires the time-series data 12i corresponding to the recognized classification ID number and including the current position and the destination from the traffic jam estimation table 10 stored in the storage section 540 (step S410).

After the step described above, the CPU 550 executes the processing in step S408. More specifically, the CPU 550 generates the current traffic jam information with the traffic jam condition recognizing section 553. Then the CPU 550 detects, with the route processing section 555, a plurality of traveling routes based on the current position information, destination information, set item information, and current traffic jam information, and selects several ones from the traveling routes based on the acquired set item information to generate candidate traveling route information concerning several candidate traveling routes satisfying the user's desire.

Further the CPU 550 acquires the current date and time with the traffic jam condition recognizing section 553 from the clock section 558. Next the traffic jam condition recognizing section 553 computes the estimated arrival time which is estimated time for arrival at a given place on the candidate traveling route indicated by the candidate traveling route information generated by the route processing section 555 based on the current traffic jam information and current date and time. Then the traffic jam condition recognizing section 553 estimates, based on the time-series data 12i acquired in step S408, the situation of traffic jams at the estimated arrival time at the given place on each of the candidate traveling routes, and generates the traffic jam estimation information concerning the estimated condition of traffic jams.

Next the CPU 550 generates, with the route processing section 555, the traveling route information concerning a plurality of traveling route corresponding to the conditions desired by the user, current traffic jam condition, and the estimated traffic jam condition based on the candidate traveling route indicated by the candidate traveling route information, current traffic jam information and traffic jam estimation information. After this operation, the route processing section 555 generates the required time information for each of the traveling routes indicated by the traveling route information.

After this step S408, the server unit 500 transmits the traveling route information, traffic jam estimation information, required time information, current traffic jam information obtained in the route search processing together with the map information to the specified terminal unit(s) 400 by controlling the interface 510 (step S411). The matching data MM may previously be acquired based on the current position information. When transmitting the map information, the CPU 550 is required only to transmit the matching mesh information MMx in the matching data including the node N and the link L indicating a road corresponding to a traveling route, display mesh information VMx in display VM data for other areas, and he mane information VMxA and background information VMxC in an area corresponding to the matching mesh information MMx.

The processing section 430 in the terminal unit 400 having received the miscellaneous information (in step S412) executes, like in the first embodiment described above, provides guidance by displaying the acquired map information (step S413). In the processing for providing guidance, the processing section 430 executes the coordinate matching processing for the received matching data MM, recognizes road conditions, namely a situation of road connection, and has the information stored in the memory 420 according to the necessity. Further the processing section 430 has the traveling route information concerning, for instance, five candidate traveling routes computed by the server unit 500 displayed in the terminal display section 140 with the display control section 184, and also has a demand for selection by the user displayed. When user performs an input operation for selecting any traveling route information, the traveling route is set.

Then the processing section 430 has, by controlling the terminal display section 140 through the display control section 184, the traveling route information concerning a traveling route selected by the user, traffic jam estimation information, required time information, and current traffic jam information displayed together with an icon A indicating a current position of a vehicle based on the current position information, each superimposed on the received map information respectively. Then the processing section 430 recognizes a traveling condition of the vehicle based on the miscellaneous data outputted from the sensor section 110. This information concerning a traveling condition of the vehicle is further transmitted to the server unit 500 according to the necessity. Further the processing section 430 reports guidance for travel of the movement as a display or voices based on the recognized traveling condition and the route guidance information included in the traveling route information with the guidance providing section 183 to provide guidance for traveling of the vehicle. Then when executing the processing for guidance, the processing section 430 acquires the traffic information like in the first embodiment described above, and provides display controls for switching the display areas 141 to 143 according to the necessity.

Namely, the server unit 500 transmits the map information or information concerning a traveling route to the terminal unit 400, and then traffic jam condition recognizing section 553 acquires traffic information or weather information, when it is determined that the vehicle has not arrived at the destination, based on the current position information, destination information and the information concerning the traveling route set in the terminal unit 400. When the traffic jam condition recognizing section 553 recognized change in the traffic conditions on the traveling route, the traffic jam condition recognizing section 553 transmits information concerning a position where the change in traffic conditions has occurred or the change in the traffic condition to the terminal unit 400. The terminal unit 400, which acquires information concerning the position where the change in traffic conditions has occurred or the change in the traffic condition from the server unit 500, executes the fee zoom-out processing for switching the display area 142, with the display control section 184, when the position C where the change in traffic conditions has occurred is outside the display area 141. Further the terminal unit 400 executes the free zoom-in processing in response to an input operation for demand of detailed display of the display area 143 performed by the user in the terminal input section 130 according to the necessity.

As described above, like in the first embodiment, guidance is provided by switching the display areas 141 to 143 according to the necessity. Further, when providing guidance, the server unit 500 executes the reroute search processing, like in the first embodiment, upon recognition of the demand for reroute processing from the terminal unit 400.

### [Advantages in the Second Embodiment]

As described above, in the second embodiment, when the server unit 500 recognizes a demand signal for demanding a search of a traveling route together with the current position information concerning a current position of a vehicle and the destination position information concerning a destination to which the vehicle is traveling from the terminal unit 400, the route processing section 555 in the server unit 500 searches and reports a plurality of candidate traveling routes for the vehicle, namely transmits the information concerning the candidate traveling routes to the terminal unit 400 for guidance, like in the first embodiment, based on traffic information such as the current traffic jam information concerning a traffic condition of the vehicle or traffic jam estimation information recognized with the traffic jam condition recognizing section 553, and at the terminal unit 400, the user sets a specified traveling route and has the traveling route displayed on the terminal display section 140. Then when the server unit 500 recognizes any change in the traffic conditions such as a traffic jam or a congestion on the traveling route set in the terminal unit 400 with the traffic jam condition recognizing section 553, the server unit 500 transmits the information concerning the change in traffic conditions and the position C, and when the change has occurred outside the display area 141 of the map information currently being displayed, like in the first embodiment, the display control section 184 in the terminal unit 400 executes the processing for changing the reduction scale to show the map information with the display area 142 including the site of the change in the traffic conditions. Because of this configuration, like in the first embodiment, changes in traffic conditions can easily be recognized, and a user can easily determine whether the running should be continued on the current traveling route or not, and from where a current or estimated traffic jam should be evaded, and thus the user is well informed of the traffic conditions with excellent guidance provided.

Switching control over the display areas 141 to 143 is carried out by the display control section 184 in the terminal unit 400, so that the switching control over the display areas 141 to 143 can be executed within a short period of time, thus quick display switching being ensured.

Further in the second embodiment, the traffic jam estimation table 10, which contains a relatively large volume of data and is used for estimation of traffic jams together with the map information, is stored in the server unit 500. Because of this configuration, configuration of the terminal unit 400 is simplified, and updated information can be shared also in the terminal unit 400 only by, for instance, updating the map information or the traffic jam estimation table 10 in the server unit 500, whereby the manageability and operability of the navigation system 200 can be improved and also up-to-date information can be acquired in the terminal unit 400 according to the necessity, so that excellent navigation can be realized based on the up-to-date information and users can utilize the navigation system easily and smoothly.

Further information concerning traveling routes is searched in the server unit 500 storing therein map information and the traffic jam estimation table 10, and the information is distributed to the terminal unit 400. Because of this configuration, workload in the terminal unit 400 can be reduced, and the navigation system can be utilized even with, for instance, a mobile telephone without requiring the large processing capacity to the terminal unit 400, whereby configuration of the terminal unit 400 can be simplified with the size and cost reduced, so that utilization of the navigation system can easily be promoted.

Further configuration of the processing section 180 in the terminal unit 400 and that of the CPU 550 in the server unit 500 are based on programs, so that configuration enabling easy utilization of the map information can easily be realized and utilization of the navigation system can further be promoted. In addition, the programs are recorded in a recording medium so that the programs can be read out by a computing section, namely a computer, whereby configuration enabling easy and smooth utilization of the map information can easily be realized and treatment of the programs is quite easy, so that utilization of the navigation system can further be promoted. It is to be noted that a number of computers used in this invention is not limited one unit, and also the configuration is allowable in which a plurality of computers are combined into a network state, or in which a CPU, a chip like a microcomputer, or a circuit board with a plurality of electric components mounted therein is employed.

### [Variant Embodiments]

The present invention is not limited to the embodiments described above, and variants are allowable in the range in which the objects of the present invention can be achieved.

Namely, a moving body as an object for this invention is not limited to a vehicle, and the present invention is applicable to any type of moving body such as an airplane or a vessel, and further users themselves may be regarded as objects for this invention with the configuration in which a current position of a user carrying the terminal unit 400 is regarded as a current position of the terminal unit 400. Further, as described above, also the configuration is allowable in which a user directly carries the terminal unit 400, or in which a mobile telephone or a PHS (Personal Handyphone System) is used as the terminal unit 400 and also server unit 500 is used as a base station for the mobile telephone or the PHS, and the mobile telephone or the PHS acquires information for the base station. Further as described above, the present invention is especially useful when applied to a moving body which may cause or come across with a traffic jam when moving.

Further the traffic condition is not limited to a traffic jam, and includes various situations around travel of a moving body.

The descriptions above assume the configuration in which information concerning several candidate traveling routes narrowed down based on the destination information and set item information is transmitted, but also the configuration is allowable in which a traveling route is set, namely route search is performed based on only the current position information and destination information. Further the descriptions above assume the configuration in which the current position information recognized by the current position recognizing section is acquired based on the output data from various sensors or GPS data outputted from the GPS receiving section, but any method may be employed for recognizing a current position of a moving body, and as described above, the configuration is allowable in which a simulated current position inputted in the terminal input section 130 is recognized as a current position. Further the configuration is not limited to that in which a plurality of traveling routes are reported to and selected by a user, and also the configuration is allowable in which the optimal traveling route is reported to the user.

Further the configuration is allowable in which only the display area 142 is provided and switching the detailed display area 143 is not carried out. In addition, the configuration of the present invention is not limited to that in which the reduction scale is substantially successively switching like in free zoom-out or in free zoom-in, and also the configuration is allowable in which switching of display areas is performed simply among the display areas 141 to 143 or switching step by step is performed, and any method may be employed for switching control.

The descriptions above assume the configuration in which various functions are provided as programs, but also the configuration is allowable as described above, for instance, in which hardware such as a circuit board or a chip like an IC (Integrated Circuit) is employed, and there is no specific restriction over the configuration. With the configuration in which programs are read out from a separate recording medium, treatment of the programs is quite easy and utilization of the navigation system can further be promoted.

Further descriptions of the second embodiment assume the configuration in which the map information and the traffic jam estimation table 10 are stored in the server unit 500, but also the configuration is allowable in which at least either one of the map information and the traffic jam estimation table 10 is stored in the terminal unit 400.

The above descriptions assume the configuration in which the transceiver 410 is provided in the terminal unit 400, but also the configuration is allowable in which the terminal unit 400 and the transceiver 410 are separated from each other, for instance, a mobile telephone or a PHS is used as the transceiver 410, and this transceiver 410 is connected to the terminal unit 400 to execute smooth transaction of information.

The descriptions above assume the configuration in which display on the terminal display section 140 is switched with the display control section 184 in the terminal unit 400, but also the configuration is allowable, for instance, in which the display control section 184 is provided in the server unit 500, the display area 141 to be displayed on the terminal display section 140 in the terminal unit 400 is set with the display control section 184, the server unit 500 determines the relation between the display area 141 and an area in which a change in traffic conditions has occurred, the display area 142 is set according to the necessity, and the terminal unit 400 provides controls for switching the display area 141 to the display area 142. As described above, with the configuration in which also switching control over the display areas 141 to 143 is carried out by the terminal unit 400, the terminal unit 400 can further be simplified, and the configuration can easily be constructed in which a compact size mobile device such as a mobile telephone can is used for utilization of the navigation system according to the present invention.

The descriptions above assume the configuration in which the display areas 141 to 143 are switched by recognizing a change in traffic conditions on a set traveling route, but also the configuration is allowable in which a traveling route is not set and controls are provided so that a change in traffic conditions forward in the direction in which the vehicle runs is recognized, and the display area 142 including the area where the change has occurred is displayed.

The change in traffic conditions is not limited to a traffic jam or a congestion, and also the configuration is allowable in which such situations as generation of a cliff failure, approach of a typhoon, and bad weather conditions such as a storm or a blizzard are also regarded as changes in traffic conditions.

Specific structures and procedures when carrying out the present invention can be changed to other ones in the range in which the objects of the present invention can be achieved.

### [Advantages of the Variant Embodiments]

As described above, in the embodiments described above, a traveling route for a vehicle is set based on the current position information concerning a current position of the vehicle, destination concerning a position of a destination to which the vehicle travels, and traffic information such as current traffic jam information concerning traffic conditions of the vehicle or traffic jam estimation information, and when a change in traffic conditions is recognized outside the display area 141 for the map information currently being displayed on the traveling route, the processing for changing the reduction scale is carried out so that the display area 142 including a position of the change in traffic conditions is displayed. Because of the features, a change in traffic conditions can easily be recognized, and a user can easily determine whether running on the current traveling route is to be continued or not, or from where a current or estimated traffic jam is to be evaded, and the user is well informed of the traffic conditions, so that excellent guidance can be provided.

In the embodiments described above, when the server unit 500 recognizes a demand signal for demanding search of a raveling route together with the current position information concerning a current position of a vehicle, and destination information concerning a position of a destination to which the vehicle travels from the terminal unit 400, the server unit 500 sets a traveling route for the vehicle based on traffic information such as the recognized current traffic jam information concerning traffic conditions for the vehicle or the traffic jam estimation information, and transmits the information to the terminal unit 400, and further when any change in traffic conditions on the traveling route set in the terminal unit 400 is recognized, the server unit 500 transmits information concerning the change in traffic conditions and the position C of the change, and further when a change in traffic conditions is recognized outside the display area 141 for the map information currently being displayed on the terminal unit 400, the server unit 500 executes the processing for changing the reduction scale so that the display area 142 including the position of the change in traffic conditions is displayed. Because of this feature, a change in traffic conditions can easily be recognized, and a user can easily determine whether running on the current traveling route is to be continued or not or from where a current or estimated traffic jam is to be evaded, and the user is well informed of the traffic conditions, so that excellent guidance can be provided.

In the embodiments described above, when any change in traffic conditions outside the display area 141 for the map information currently being displayed is recognized forward in the running direction in which the vehicle runs, the processing for changing the reduction scale for displaying the display area 142 including the position where the change has occurred is executed, so that a change in traffic conditions can easily be recognized, and determination as to whether running on the current traveling route is to be continued or not, or as to from where a current or estimated traffic jam is to be evaded can easily be made, so that the users are well informed of the traffic conditions and excellent guidance can be provided.

## Claims

1. A traffic condition reporting device (100) comprising:
a map information acquiring section for acquiring map information;
a current position information acquiring section for acquiring current position information concerning the current position of a moving body;
a destination information acquiring section for acquiring destination information concerning the position of the destination to which said moving body travels;
a traffic information acquiring section (120) for acquiring traffic information concerning traffic conditions of said moving body;
a traveling route setting section for setting a traveling route for said moving body based on said current position information, said destination information, and said map information; and
a display control section for having said traveling route displayed on a display section in a manner of being superimposed on said map information, and also for having said map information displayed, when a change in traffic condition for said moving body is recognized beyond the display area being displayed based on said acquired traffic information, in a display area including the site of the change on said display section, **characterised in that** said traffic information acquiring section is arranged to acquire either one of the current traffic information concerning traffic conditions at the current point of time and traffic estimation information concerning time-series change in traffic conditions based on statistic traffic condition information obtained by subjecting traffic conditions in the past to statistic processing as a function of time as traffic information; and
by an estimated position recognizing section for recognizing an estimated position to which said moving body travels in a specified period of time,
wherein, when recognizing any change in traffic conditions for said moving body based on said traffic estimation information, said display control section has image information indicating an estimated position of said moving body at a point of time when the change in traffic conditions recognized by said estimated position recognizing section displayed so as to be superimposed on said map information.

2. The traffic condition reporting device (100) according to claim 1, further comprising:
a traveling direction acquiring section for acquiring traveling direction information concerning a traveling direction in which said moving body travels,
wherein said display control section provides controls for changing said display area in response to the change in traffic conditions in the forward direction from the current position of said moving body on said traveling route based on said traveling direction information.

3. The traffic condition reporting device (100) according to any of claim 1 or 2,
wherein said display control section provides controls for having said map information displayed in a display area including image information indicating a current position of said moving body as well as in the area including the site of change in traffic conditions for said moving body.

4. The traffic condition reporting device (100) according to any of claims 1 through 3, wherein said display control section provides controls for successively changing the reduction scale from said display area in which image information indicating a current position of said moving body is displayed in a manner of being superimposed on said map information to said display area for map information including the site of change in traffic condition for said moving body.

5. The traffic condition reporting device (100) according to claim 1, wherein said display control section provide controls for having at least either one of a period of rime required for said moving body to travel from the current position to an estimated position and a point of time when said moving body arrives at the estimated position together with the image display indicating the estimated position of said moving body.

6. The traffic condition reporting device (100) according to claim 1 or claim 2, further comprising:
a display change demand information acquiring section for acquiring display area change demand information for demanding change of a display area,
wherein, when recognizing acquisition of the display area change demand information with said display area change demand information acquiring section, said display control section provides controls for changing the reduction scale to switch a display area to that including image information indicating the estimated position of said moving body and the site of change in traffic condition.

7. The traffic condition reporting device (100) according to any of claims 1 through 6, wherein said display control section has traffic condition image information indicating traffic conditions based on said acquired traffic information displayed in a manner of being superimposed on said map information, and also has change image information, which indicates the change in traffic conditions for said moving body and has a display format different from that of said traffic condition image information, displayed in a manner of being superimposed on said map information.

8. The traffic condition reporting device (100) according to any of claims 1 through 7, wherein said display control section provides controls for having the display area changed upon recognition of a change in traffic conditions for said moving body displayed for a pre-specified period of time and then restoring the original display area upon recognition of display area change demand information for demanding change of the display area.

9. A traffic condition reporting system comprising:
a server unit comprising a storage section (160) for storing map information therein; and
a traffic condition reporting device (100) according to any of claims 1 to 8 for acquiring said map information from this server unit via a network.

10. A traffic condition reporting system comprising:
a traffic condition reporting device (100) according to any of claims 1 through 8; and
a terminal unit (130) connected via a network to the traffic condition reporting device in the state enabling data transaction therebetween, the terminal unit having a display section (140) for displaying said map information thereon.

11. A traffic condition reporting system comprising:
a terminal unit (130) having a demand signal generating section for generating a demand signal for demanding a traveling route for a moving body to travel on and a display section (140) for providing a screen display of said traveling route superimposed on the map information; and
a server unit (500) with said terminal unit connected thereto via a network in the state enabling data transaction therebetween and comprising a storage section for storing therein map information, a current position information acquiring section for acquiring current position information concerning a current position of said moving body, a destination information acquiring section for acquiring destination information concerning a position of a destination to which said moving body travels to, a traffic information acquiring section for acquiring traffic information concerning traffic conditions for said moving body, a demand signal recognizing section for recognizing said demand signal, and a traveling route setting section for setting, when said demand signal is recognized by said demand signal recognizing section, a traveling route for said moving body based on said current position information, said destination information and said map information,
wherein at least either one of said terminal unit and said server unit has a display control section for providing controls for having said traveling route displayed on said display section in a manner of being superimposed on said map information, and also for providing controls, when a change in traffic conditions for said moving body is recognized beyond the display area currently being displayed based on the traffic information acquired by the traffic information acquiring section in said server unit, to have said map information displayed in a display area including the area of change **characterised in that**:
the traffic information acquiring section is arranged to acquire either one of the current traffic information concerning traffic conditions at the current point of time and traffic estimation information concerning time-series change in traffic conditions based on statistic traffic condition information obtained by subjecting traffic conditions in the past to statistic processing as a function of time as traffic information; and
by an estimated position recognising section for recognising an estimated position to which said moving body travels in a specified period of time, wherein, when recognising any change in traffic conditions for said moving body based on said traffic estimation information, said display control section has image information indicating an estimated position of said moving body at a point of time when the change in traffic conditions recognised by said estimated position recognising section displayed so as to be superimposed on said map information.

12. A traffic condition reporting method comprising the steps of:
acquiring map information, current position information concerning current position of a moving body, destination information concerning the position of a destination to which said moving body travels, and traffic information concerning traffic conditions for said moving body;
setting a traveling route for said moving body based on said current position information, said destination information, and said map information; and
providing controls for having said traveling route displayed on a display section in a manner of being superimposed on said map information, and also for having, when a change in traffic conditions for said moving body is recognized beyond the display area currently being displayed based on said acquired traffic information, said map information displayed in a display area including the area on said display section **characterised in that**:
the traffic information is that acquired is either one of the current information concerning traffic conditions at the current point of time and traffic estimation information concerning time-series change in traffic conditions based on statistic traffic condition information obtained by subjecting traffic conditions in the past to statistic processing as a function of time as traffic information; and
by the step of estimating a position to which said moving body travels in a specified period of time, such that, when recognising any change in traffic conditions for said moving body based on said traffic estimation information, image information is displayed indicating an estimated position of said moving body at a point of time when the change in traffic conditions is recognised so as to be superimposed on said map information.

13. A traffic condition reporting program for making a computing section execute the traffic condition reporting method according to claim 12.

14. A recording medium with the traffic condition reporting program described in claim 13 recorded therein in a manner readable by a computing section.

## Patentansprüche

1. Verkehrsbedingungs-Meldevorrichtung (100), die umfasst:
einen Karteninformations-Erfassungsabschnitt zum Erfassen von Karteninformationen;
einen Abschnitt zum Erfassen von Informationen über eine aktuelle Position, der Informationen über eine aktuelle Position bezüglich der aktuellen Position eines sich bewegenden Körpers erfasst;
einen Zielinformations-Erfassungsabschnitt zum Erfassen von Zielinformationen bezüglich der Position des Ziels, zu dem der sich bewegende Körper fährt;
einen Verkehrsinformations-Erfassungsabschnitt (120) zum Erfassen von Verkehrsinformation bezüglich Verkehrsbedingungen des sich bewegenden Körpers;
ein Fahrtrouten-Festlegeabschnitt zum Festlegen einer Fahrtroute für den sich bewegenden Körper auf Basis der aktuellen Positionsinformationen, der Zielinformationen und der Karteninformationen; und
ein Anzeige-Steuerabschnitt, der die Fahrtroute auf einem Anzeigeabschnitt auf die Karteninformationen aufgelegt anzeigen lässt, und der des Weiteren die Karteninformationen, wenn eine Änderung der Verkehrsbedingungen für den sich bewegenden Körper jenseits des angezeigten Anzeigenbereiches auf Basis der erfassten Verkehrsinformationen erkannt wird, in einem Anzeigebereich anzeigen lässt, der den Ort der Veränderung auf dem Anzeigeabschnitt einschließt, **gekennzeichnet dadurch, dass** der Verkehrsinformations-Erfassungsabschnitt so eingerichtet ist, dass er entweder die aktuellen Verkehrsinformationen bezüglich der Verkehrsbedingungen zum aktuellen Zeitpunkt oder Verkehrs-Schätz-Informationen, die eine Zeitreihen-Veränderung von Verkehrsbedingungen auf Basis statistischer Verkehrsbedingungs-Informationen betreffen, die gewonnen werden, indem Verkehrsbedingungen in der Vergangenheit statistischer Verarbeitung als Funktion der Zeit unterzogen werden, als Verkehrsinformationen erfasst und
durch einen Abschnitt zum Erkennen einer geschätzten Position, der eine geschätzte Position erkennt, zu der der sich bewegende Körper in einem angegebenen Zeitraum fährt,
wobei, wenn eine Veränderung von Verkehrsbedingungen für den sich bewegenden Körper auf Basis der Verkehrs-Schätz-Informationen erkannt wird, der Anzeige-Steuerabschnitt Bildinformationen, die eine geschätzte Position des sich bewegenden Körpers zu einem Zeitpunkt der Veränderung von Verkehrsbedingungen zeigen, die durch den Abschnitt zum Erkennen einer geschätzten Position erkannt wird, auf die Karteninformation aufgelegt anzeigen lässt.

2. Verkehrsbedingungs-Meldevorrichtung (100) nach Anspruch 1, die des Weiteren umfasst:
einen Fahrtrichtungs-Erfassungsabschnitt zum Erfassen von Fahrtrichtungsinformationen bezüglich einer Fahrtrichtung, in der der sich bewegende Körper fährt,
wobei der Anzeige-Steuerabschnitt Steuerelemente zum Ändern des Anzeigebereiches in Reaktion auf die Veränderung der Verkehrsbedingungen in der Vorwärtsrichtung gegenüber der aktuellen Position des sich bewegenden Körpers auf der Fahrtroute auf Basis der Fahrtrichtungsinformationen bereitstellt.

3. Verkehrsbedingungs-Meldevorrichtung (100) nach einem der Ansprüche 1 oder 2, wobei der Anzeige-Steuerabschnitt Steuerelemente bereitstellt, die Karteninformationen in einem Anzeigebereich, der Bildinformationen einschließt, die eine aktuelle Position des sich bewegenden Körpers zeigen, sowie in dem Bereich anzeigen lassen, der den Ort der Veränderung von Verkehrsbedingungen für den sich bewegenden Körper einschließt.

4. Verkehrsbedingungs-Meldevorrichtung (100) nach einem der Ansprüche 1 bis 3, wobei der Anzeige-Steuerabschnitt Steuerelemente bereitstellt, die den Verkleinerungsmaßstab von dem Anzeigebereich, in dem Bildinformationen, die eine aktuelle Position des sich bewegenden Körpers zeigen, auf die Karteninformationen aufgelegt angezeigt werden, zu dem Anzeigebereich für Karteninformationen ändern, die den Ort der Veränderung von Verkehrsbedingungen für den sich bewegenden Körper einschließen.

5. Verkehrsbedingungs-Meldevorrichtung (100) nach Anspruch 1, wobei der Anzeige-Steuerabschnitt Steuerelemente bereitstellt, die wenigstens einen Zeitraum, den der sich bewegende Körper benötigt, um von der aktuellen Position zu einer geschätzten Position zu fahren, und einen Zeitpunkt, zu dem der sich bewegende Körper an der geschätzten Position eintrifft, zusammen mit der Bildanzeige anzeigen lassen, die die geschätzte Position des sich bewegenden Körpers zeigt.

6. Verkehrsbedingungs-Meldevorrichtung (100) nach Anspruch 1 oder 2, die des Weiteren umfasst:
einen Abschnitt zum Erfassen von Informationen zum Anfordern einer Änderung einer Anzeige, der Informationen zum Anfordern einer Änderung des Anzeigebereiches erfasst, die eine Änderung eines Anzeigebereiches anfordern,
wobei, wenn Erfassung der Informationen zum Anfordern einer Änderung des Anzeigebereiches mit dem Abschnitt zum Erfassen von Informationen zum Anfordern einer Änderung des Anzeigebereiches erkannt wird, der Anzeige-Steuerabschnitt Steuerelemente zum Ändern des Verkleinerungsmaßstabes bereitstellt, um einen Anzeigebereich auf den umzustellen, der Bildinformationen einschließt, die die geschätzte Position des sich bewegenden Körpers und den Ort der Veränderung von Verkehrsbedingungen zeigen.

7. Verkehrsbedingungs-Meldevorrichtung (100) nach einem der Ansprüche 1 bis 6, wobei der Anzeige-Steuerabschnitt Verkehrsbedingungs-Bildinformationen, die Verkehrsbedingungen auf Basis der erfassten Verkehrsinformationen zeigen, auf die Karteninformationen aufgelegt anzeigen lässt, und des Weiteren Veränderungs-Bildinformationen, die die Veränderung von Verkehrsbedingungen für den sich bewegenden Körper zeigen und ein Anzeigeformat haben, das sich von dem der Verkehrsbedingungs-Bildinformationen unterscheidet, auf die Karteninformationen aufgelegt anzeigen lässt.

8. Verkehrsbedingungs-Meldevorrichtung (100) nach einem der Ansprüche 1 bis 7, wobei der Anzeige-Steuerabschnitt Steuerelemente bereitstellt, die den Anzeigebereich, der bei Erkennung einer Veränderung von Verkehrsbedingungen für den sich bewegenden Körper geändert wird, bei Erkennung von Informationen zum Anfordern einer Änderung des Anzeigebereiches, die Änderung des Anzeigebereiches anfordern, über einen vorgegebenen Zeitraum anzeigen lassen und dann den ursprünglichen Anzeigebereich wieder herstellen.

9. Verkehrsbedingungs-Meldesystem, das umfasst:
ein Server-Einheit, die einen Speicherabschnitt (160) zum Speichern von Karteninformationen darin umfasst; und
eine Verkehrsbedingungs-Meldevorrichtung (100) nach einem der Ansprüche 1 bis 8, die die Karteninformationen von dieser Server-Einheit über ein Netzwerk erfasst.

10. Verkehrsbedingungs-Meldesystem, das umfasst:
eine Verkehrsbedingungs-Meldevorrichtung (100) nach einem der Ansprüche 1 bis 8; und
eine Endgeräteeinheit (130), die über ein Netzwerk mit der Verkehrsbedingungs-Meldevorrichtung in dem Zustand verbunden ist, der Datentransaktionen zwischen ihnen ermöglicht, wobei die Endgeräteeinheit einen Anzeigeabschnitt (140) zum Anzeigen der Karteninformationen darauf aufweist.

11. Verkehrsbedingungs-Meldesystem, das umfasst:
eine Endgeräteeinheit (130), die einen Abschnitt zum Erzeugen eines Anforderungssignals aufweist, der ein Anforderungssignal erzeugt, das eine Fahrtroute anfordert, auf der ein sich bewegender Körper fährt, und einen Anzeigeabschnitt (140) aufweist, der eine Bildschirmanzeige der Fahrtroute auf die Karteninformationen aufgelegt bereitstellt; und
eine Server-Einheit (500), wobei die Endgeräteeinheit mit ihr über ein Netzwerk in dem Zustand verbunden ist, der Datentransaktionen zwischen ihnen ermöglicht, und die einen Speicherabschnitt zum Speichern von Karteninformationen, einen Abschnitt zum Erfassen aktueller Positionsinformationen, der aktuelle Positionsinformationen bezüglich einer aktuellen Position des sich bewegenden Körpers erfasst, einen Abschnitt zum Erfassen von Zielinformationen, der Zielinformationen bezüglich einer Position eines Ziels erfasst, zu dem der sich bewegende Körper fährt, einen Abschnitt zum Erfassen von Verkehrsinformationen, der Verkehrsinformationen bezüglich Verkehrsbedingungen für den sich bewegenden Körper erfasst, einen Abschnitt zum Erkennen eines Anforderungssignals, der das Anforderungssignal erkennt, und einen Abschnitt zum Festlegen einer Fahrtroute, der, wenn das Anforderungssignal von dem Abschnitt zum Erkennen eines Anforderungssignals erkannt wird, eine Fahrtroute für den sich bewegenden Körper auf Basis der aktuellen Positionsinformationen, der Zielinformationen und der Karteninformationen festlegt,
wobei wenigstens entweder die Endgeräteeinheit oder die Server-Einheit einen Anzeige-Steuerabschnitt aufweist, der Steuerelemente bereitstellt, die die Fahrtroute auf dem Anzeigeabschnitt auf die Karteninformationen aufgelegt anzeigen lassen, und des Weiteren Steuerelemente bereitstellt, die, wenn eine Veränderung von Verkehrsbedingungen für den sich bewegenden Körper jenseits des Anzeigebereiches, der aktuell angezeigt wird, auf Basis der durch den Abschnitt zum Erfassen der Verkehrsinformationen in der Server-Einheit erfassten Verkehrsinformationen erkannt wird, die Karteninformationen in einem Anzeigenbereich anzeigen lassen, der den Bereich der Veränderung einschließt, **gekennzeichnet dadurch, dass**:
der Abschnitt zum Erfassen von Verkehrsinformationen so eingerichtet ist, dass er sowohl die aktuellen Verkehrsinformationen bezüglich der Verkehrsbedingungen zu dem aktuellen Zeitpunkt, als auch Verkehrs-Schätz-Informationen, die eine Zeitreihen-Veränderung von Verkehrsbedingungen auf Basis statistischer Verkehrsbedingungsinformationen betreffen, die gewonnen werden, indem Verkehrsbedingungen in der Vergangenheit statistischer Verarbeitung als Funktion in der Zeit unterzogen werden, als Verkehrsinformationen erfasst; und
durch einen Abschnitt zum Erkennen einer geschätzten Position, der eine geschätzte Position erkennt, zu der der sich bewegende Körper in einem angegebenen Zeitraum fährt, wobei, wenn eine Veränderung von Verkehrsbedingungen für den sich bewegenden Körper auf Basis der Verkehrs-Schätz-Informationen erkannt wird, der Anzeige-Steuerabschnitt Bildinformationen, die eine geschätzte Position des sich bewegenden Körper zu einem Zeitpunkt der Veränderung von Verkehrsbedingungen zeigen, die durch den Abschnitt zum Erkennen einer geschätzten Position erkannt wird, auf die Karteninformationen aufgelegt anzeigen lässt.

12. Verkehrsbedingungs-Meldeverfahren, das die folgende Schritte umfasst:
Erfassen von Karteninformationen, aktuellen Positionsinformationen bezüglich einer aktuellen Position eines sich bewegenden Körpers, Zielinformationen bezüglich der Position eines Ziels, zu dem der sich bewegende Körper fährt, und Verkehrsinformationen bezüglich Verkehrsbedingungen für den sich bewegenden Körper;
Festlegen einer Fahrtroute für den sich bewegenden Körper auf Basis der aktuellen Positionsinformationen, der Zielinformationen und der Karteninformationen; und
Bereitstellen von Steuerelementen, die die Fahrtroute auf einem Anzeigeabschnitt auf die Karteninformationen aufgelegt anzeigen lassen und die, wenn eine Veränderung von Verkehrsbedingungen für den sich bewegenden Körper jenseits des Anzeigebereiches, der aktuell angezeigt wird, auf Basis der erfassten Verkehrsinformationen erkannt wird, die Karteninformationen in einem Anzeigebereich, der diesen Bereich einschließt, auf dem Anzeigeabschnitt anzeigen lassen, **gekennzeichnet dadurch, dass**
als die Verkehrsinformationen sowohl die aktuellen Informationen bezüglich der Verkehrsbedingungen zum aktuellen Zeitpunkt, als auch Verkehrsinformationen erfasst werden, die eine Zeitreihen-Veränderung von Verkehrsbedingungen auf Basis statistischer Verkehrsinformationen betreffen, die gewonnen werden, indem Verkehrsbedingungen in der Vergangenheit statistische Verarbeitung als Funktion der Zeit unterzogen werden; und
durch den Schritt des Schätzens einer Position, zu der der sich bewegende Körper in einem angegebenen Zeitraum fährt, so dass, wenn eine Veränderung von Verkehrsbedingungen für den sich bewegenden Körper auf Basis der Verkehrs-Schätzungsinformationen erkannt wird, Bildinformationen, die eine geschätzte Position des sich bewegenden Körpers zu einem Zeitpunkt, zu dem die Veränderung von Verkehrsbedingungen erkannt wird, auf die Karteninformationen aufgelegt angezeigt werden.

13. Verkehrsbedingungs-Meldeprogramm, das ein Computer veranlasst, das Verkehrsbedingungs-Melderverfahren nach Anspruch 12 auszuführen.

14. Aufzeichnungsmedium, auf dem das in Anspruch 13 beschriebene Verkehrsbedingungs-Meldeprogramm so aufgezeichnet ist, dass es von einem Berechnungsabschnitt gelesen werden kann.

## Revendications

1. Dispositif de notification de l'état de la circulation (100) comprenant :
une section d'acquisition d'informations cartographiques destinée à acquérir des informations cartographiques,
une section d'acquisition d'informations de position en cours destinée à acquérir des informations de position en cours concernant la position en cours d'un corps mobile,
une section d'acquisition d'informations de destination destinée à acquérir des informations de destination concernant la position de la destination vers laquelle se déplace ledit corps mobile,
une section d'acquisition d'informations sur la circulation (120) destinée à acquérir des informations sur la circulation concernant les conditions de circulation dudit corps mobile,
une section d'établissement d'itinéraire de déplacement destinée à établir un itinéraire de déplacement pour ledit corps mobile sur la base desdites informations de position en cours, desdites informations de destination, et desdites informations cartographiques, et
une section de commande d'affichage destinée à faire en sorte que ledit itinéraire de déplacement soit affiché sur une section d'affichage de manière à ce qu'il soit superposé sur lesdites informations cartographiques, et également destinée à faire en sorte que lesdites informations cartographiques soient affichées, lorsqu'un changement des conditions de circulation pour ledit corps mobile est reconnu au-delà de la zone d'affichage qui est affichée sur la base desdites informations de circulation acquises, dans une zone d'affichage comprenant le site de changement sur ladite section d'affichage, **caractérisée en ce que** ladite section d'acquisition d'informations de circulation est conçue pour acquérir les unes ou les autres des informations de circulation en cours concernant les conditions de circulation à l'instant en cours et des informations d'estimation de circulation concernant une variation dans le temps des conditions de circulation sur la base d'informations de condition de circulation statistiques obtenues en soumettant les conditions de circulation dans le passé à un traitement statistique en fonction de l'heure en tant qu'informations de circulation, et
par une section de reconnaissance de position estimée destinée à reconnaître une position estimée vers laquelle se déplace ledit corps mobile dans un intervalle de temps spécifié,
où, lorsque l'on se rend compte d'un changement quelconque des conditions de circulation pour ledit corps mobile sur la base desdites informations d'estimation de circulation, ladite section de commande d'affichage fait en sorte que des informations d'image, indiquant une position estimée dudit corps mobile à un instant lorsque le changement des conditions de circulation est reconnu par ladite section de reconnaissance de position estimée, soient affichées de manière à être superposées sur lesdites informations cartographiques.

2. Dispositif de notification de l'état de la circulation (100) selon la revendication 1, comprenant en outre :
une section d'acquisition de direction de déplacement destinée à acquérir des informations de direction de déplacement concernant une direction de déplacement dans laquelle se déplace ledit corps mobile,
où ladite section de commande d'affichage fournit des commandes pour modifier ladite zone d'affichage en réponse au changement des conditions de circulation dans la direction vers l'avant par rapport à la position en cours dudit corps mobile sur ledit itinéraire de déplacement sur la base desdites informations de direction de déplacement.

3. Dispositif de notification de l'état de la circulation (100) selon l'une quelconque des revendications 1 ou 2,
dans lequel ladite section de commande d'affichage fournit les commandes pour faire en sorte que lesdites informations cartographiques soient affichées dans une zone d'affichage comprenant des informations d'image indiquant une position en cours dudit corps mobile de même que dans la zone comprenant le site de changement des conditions de circulation pour ledit corps mobile.

4. Dispositif de notification de l'état de la circulation (100) selon l'une quelconque des revendications 1 à 3, dans lequel ladite section de commande d'affichage fournit des commandes destinées à modifier successivement l'échelle de réduction de ladite zone d'affichage dans laquelle sont affichées des informations d'image indiquant une position en cours dudit corps mobile de manière à ce qu'elles soient superposées sur lesdites informations cartographiques dans ladite zone d'affichage pour les informations cartographiques comprenant le site de changement de l'état de la circulation pour ledit corps mobile.

5. Dispositif de notification de l'état de la circulation (100) selon la revendication 1, dans lequel ladite section de commande d'affichage fournit des commandes destinées à faire en sorte qu'au moins l'un d'un intervalle de temps requis pour que ledit corps mobile se déplace de la position en cours jusqu'à une position estimée et d'un instant auquel ledit corps mobile arrive à la position estimée en même temps que l'affichage d'image indiquant la position estimée dudit corps mobile.

6. Dispositif de notification de l'état de la circulation (100) selon la revendication 1 ou la revendication 2, comprenant en outre :
une section d'acquisition d'informations de demande de changement d'affichage destinée à acquérir des informations de demande de changement de zone d'affichage destinées à demander le changement d'une zone d'affichage,
dans lequel, lors de la reconnaissance de l'acquisition des informations de demandes de changement de zone d'affichage par ladite section d'acquisition d'informations de demande de changement de zone d'affichage, ladite section de commande d'affichage fournit des commandes pour changer l'échelle de réduction afin de faire passer la zone d'affichage à celle comprenant des informations d'image indiquant la position estimée dudit corps mobile et le site de changement de l'état de la circulation.

7. Dispositif de notification de l'état de la circulation (100) selon l'une quelconque des revendications 1 à 6, dans lequel ladite section de commande d'affichage fait en sorte que des informations d'image d'état de la circulation indiquant les états de la circulation sur la base desdites informations de circulation acquises soient affichées de manière à ce qu'elles soient superposées sur lesdites informations cartographiques, et fait également en sorte que les informations d'image de changement, qui indiquent le changement des conditions de circulation pour ledit corps mobile et présentent un format d'affichage différent de celui desdites informations d'image de l'état de la circulation, soient affichées de manière à être superposées sur lesdites informations cartographiques.

8. Dispositif de notification de l'état de la circulation (100) selon l'une quelconque des revendications 1 à 7, dans lequel ladite section de commande d'affichage fournit des commandes destinées à faire en sorte que la zone d'affichage, changée lors de la reconnaissance d'un changement des conditions de circulation pour ledit corps mobile, soit affichée pendant un intervalle de temps pré-spécifié et ensuite à rétablir la zone d'affichage d'origine lors de la reconnaissance d'informations de demande de changement de zone d'affichage destiné à demander un changement de la zone d'affichage.

9. Système de notification de l'état de la circulation comprenant :
une unité de serveur comprenant une section de mémorisation (160) destinée à mémoriser dans celle-ci des informations cartographiques, et
un dispositif de notification de l'état de la circulation (100) selon l'une quelconque des revendications 1 à 8, destiné à acquérir lesdites informations cartographiques à partir de cette unité de serveur par l'intermédiaire d'un réseau.

10. Système de notification de l'état de la circulation comprenant :
un dispositif de notification de l'état de la circulation (100) selon l'une quelconque des revendications 1 à 8, et
une unité de terminal (130) connectée par l'intermédiaire d'un réseau au dispositif de notification de l'état de la circulation dans l'état permettant une transaction de données entre eux, l'unité de terminal comportant une section d'affichage (140) destinée à afficher sur celle-ci lesdites informations cartographiques.

11. Système de notification de l'état de la circulation comprenant :
une unité de terminal (130) comportant une section de génération de signal de demande destinée à générer un signal de demande pour demander un itinéraire de déplacement pour un corps mobile sur lequel se déplacer, et une section d'affichage (140) destinée à fournir un affichage sur écran dudit itinéraire de déplacement superposé sur les informations cartographiques, et
une unité de serveur (500), ladite unité de terminal étant connectée à celle-ci par l'intermédiaire d'un réseau dans l'état permettant une transaction de données entre elles, et comprenant une section de mémorisation destinée à mémoriser dans celle-ci des informations cartographiques, une section d'acquisition d'informations de position en cours destinée à acquérir des informations de position en cours concernant une position en cours dudit corps mobile, une section d'acquisition d'informations de destination destinée à acquérir des informations de destination concernant une position d'une destination vers laquelle ledit corps se déplace, une section d'acquisition d'informations de circulation destinée à acquérir des informations de circulation concernant les conditions de circulation pour ledit corps mobile, une section de reconnaissance de signal de demande destinée à reconnaître ledit signal de demande, et une section d'établissement d'itinéraire de déplacement destinée à établir, lorsque ledit signal de demande est reconnu par ladite section de reconnaissance de signal de demande, un itinéraire de déplacement pour ledit corps mobile sur la base desdites informations de position en cours, desdites informations de destination et desdites informations cartographiques,
dans lequel au moins l'une ou l'autre de ladite unité de terminal et de ladite unité de serveur comporte une section de commande d'affichage destinée à fournir des commandes destinées à faire en sorte que ledit itinéraire de déplacement soit affiché sur ladite section d'affichage de manière à être superposé sur lesdites informations cartographiques, et également destinée à fournir des commandes, lorsqu'un changement des conditions de circulation pour ledit corps mobile est reconnu au-delà de la zone d'affichage qui est actuellement affichée sur la base des informations de circulation acquises par la section d'acquisition d'informations de circulation dans ladite unité de serveur, afin de faire en sorte que lesdites informations cartographiques soient affichées dans une zone d'affichage comprenant la zone de changement, **caractérisé :**
**en ce que** la section d'acquisition d'informations de circulation est agencée pour acquérir les unes ou les autres des informations de circulation en cours concernant les conditions de circulation à l'instant en cours et des informations d'estimation de circulation concernant le changement dans le temps des conditions de circulation sur la base des informations d'état de la circulation statistiques obtenues en soumettant les conditions de circulation dans le passé à un traitement statistique en fonction de l'heure en tant qu'informations de circulation, et
par une section de reconnaissance de position estimée destinée à reconnaître une position estimée vers laquelle se déplace ledit corps mobile dans un intervalle de temps spécifié, où, lors de la reconnaissance d'un changement quelconque des conditions de circulation pour ledit corps mobile sur la base desdites informations d'estimation de circulation, ladite section de commande d'affichage fait en sorte que les informations d'image, indiquant une position estimée dudit corps mobile à l'instant auquel le changement des conditions de trafic a été reconnu par ladite section de reconnaissance de position estimée, soient affichées de manière à être superposées sur lesdites informations cartographiques.

12. Procédé de notification de l'état de la circulation, comprenant les étapes consistant à :
acquérir des informations cartographiques, des informations de position en cours concernant la position en cours d'un corps mobile, des informations de destination concernant la position d'une destination vers laquelle ledit corps mobile se déplace, et des informations de circulation concernant les conditions de circulation pour ledit corps mobile,
établir un itinéraire de déplacement pour ledit corps mobile sur la base desdites informations de position en cours, desdites informations de destination, et desdites informations cartographiques, et
fournir des commandes pour faire en sorte que ledit itinéraire de déplacement soit affiché sur une section d'affichage de manière à être superposé sur lesdites informations cartographiques, et également pour faire en sorte que, lorsqu'un changement des conditions de circulation pour ledit corps mobile est reconnu au-delà de la zone d'affichage qui est actuellement affichée sur la base desdites informations de circulation acquises, lesdites informations cartographiques soient affichées dans une zone d'affichage comprenant la zone sur ladite section d'affichage, **caractérisé :**
**en ce que** les informations de circulation qui sont acquises sont les unes ou les autres des informations en cours concernant les conditions de circulation à l'instant actuel et des informations d'estimation de circulation concernant la variation dans le temps des conditions de circulation sur la base d'informations de condition de circulation statistiques obtenues en soumettant les conditions de circulation dans le passé à un traitement statistique en fonction de l'heure en tant qu'informations de circulation, et
par l'étape consistant à estimer une position vers laquelle ledit corps mobile se déplace dans un intervalle de temps spécifié, de sorte que, lorsqu'il est reconnu un changement quelconque des conditions de circulation pour ledit corps mobile sur la base desdites informations d'estimation de circulation, des informations d'image soient affichées indiquant une position estimée dudit corps mobile à un instant auquel le changement des conditions de circulation est reconnu de manière à ce qu'elles soient superposées sur lesdites informations cartographiques.

13. Programme de notification de l'état de la circulation, destiné à amener une section de calcul à exécuter le procédé de notification de l'état de la circulation selon la revendication 12.

14. Support d'enregistrement comportant le programme de notification de l'état de la circulation décrit dans la revendication 13 enregistré dans celui-ci d'une manière pouvant être lue par une section de calcul.
